(19) Europäisches Patentamt
European Patent Office
Office européen des brevets

(11) **EP 4 177 791 A1**

(12) **EUROPEAN PATENT APPLICATION**

(43) Date of publication:
**10.05.2023 Bulletin 2023/19**

(21) Application number: **21306572.5**

(22) Date of filing: **09.11.2021**

(51) International Patent Classification (IPC):
***G06N 3/04*** *(2023.01)*    ***G06N 3/08*** *(2023.01)*

(52) Cooperative Patent Classification (CPC):
**G06N 3/04;** G06N 3/082

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Datakalab**
**92110 Clichy (FR)**

(72) Inventors:
• **YVINEC, Edouard**
  **Paris (FR)**
• **DAPOGNY, Arnaud**
  **Paris (FR)**
• **BAILLY, Kevin**
  **Paris (FR)**
• **FISCHER, Lucas**
  **PARIS (FR)**

(74) Representative: **Bandpay & Greuter**
**30, rue Notre-Dame des Victoires**
**75002 Paris (FR)**

(54) **NEURAL NETWORK QUANTIZATION**

(57)    The disclosure notably relates to a computer-implemented method for neural network quantization. The method comprises providing a trained neural network. The neural network has layers of weights. The method further comprises providing a quantization operator. The quantization operator reduces the number of bits of an input bit-wise representation. The method further comprises quantizing the neural network. The quantizing of the neural network includes, for each respective layer of one or more layers of the neural network, determining a respective development of the respective layer in a sum of quantized residual errors of the quantization operator. The method constitutes an improved solution for machine-learning and neural networks.

FIG. 1A

**Description**

**TECHNICAL FIELD**

The disclosure relates to the field of computer programs and systems, and more specifically to a method, system and program for neural network quantization, and to a neural network obtainable according to the method.

**BACKGROUND**

Machine-learning and neural networks, such as Deep Neural Networks (DNNs) are gaining wider importance nowadays. Deep Neural Networks achieve outstanding accuracies on several challenging computer vision tasks such as image classification (as discussed for example in reference Kaiming He, Xiangyu Zhang, et al., Deep residual learning for image recognition, in CVPR, pages 770-778, 2016), object detection (as discussed for example in reference Wei Liu, Dragomir Anguelov, Dumitru Erhan, Christian Szegedy, Scott Reed, Cheng-Yang Fu, and Alexander C Berg, Ssd: Single shot multibox detector, in ECCV, pages 21-37, Springer, 2016) and image segmentation (as discussed for example in reference Liang-Chieh Chen, George Papandreou, Florian Schroff, and Hartwig Adam, Rethinking atrous convolution for semantic image segmentation, arXiv preprint arXiv:1706.05587,2017). However, the efficiency of DNNs, and of neural networks in general, may come at a high computational inference cost, limiting their deployment, more so on edge devices when real-time treatment is a concern.

There is thus a need for improved solutions for machine-learning and neural networks.

**SUMMARY**

It is therefore provided a computer-implemented method for neural network quantization. The method comprises providing a trained neural network. The neural network has layers of weights. The method further comprises providing a quantization operator. The quantization operator reduces the number of bits of an input bit-wise representation. The method further comprises quantizing the neural network. The quantizing of the neural network includes, for each respective layer of one or more layers of the neural network, determining a respective development of the respective layer in a sum of quantized residual errors of the quantization operator.

The method may comprise one or more of the following:

- for the said each respective layer, the sum includes terms each of a respective order and respectively comprising the quantization operator multiplied by a residual quantization error at the respective order;
- the residual quantization error at the respective order is the quantization operator applied to the difference between the weights of the layer and a sum of the inverses of the quantization operator applied to the residual quantization errors of lower respective orders;
- the development is of the type:

$$f^{(K)}: x \mapsto \sigma\left(\sum_{k=1}^{K} R^{(k)} Q(x)\, \lambda_{R^{(k)}} \lambda_x + b\right),$$

where:

- $f$ is the respective layer, $\sigma$ the activation function of $f$, and $b$ the bias of $f$,
- $R^{(k)} = Q\left(W - \sum_{i=1}^{k-1} Q^{-1}\left(R^{(i)}\right)\right)$, where Q is the quantization operator, W represents the weights of layer $f$, and $R^{(1)} = W^q = Q(W)$,
- $\lambda_x$ and $\lambda_{R(k)}$ are rescaling factors corresponding to the quantization of x and $R^{(k)}$ respectively, and
- K is the development order for the respective layer;

- the quantizing of the neural network comprises removing a proportion of output channels that contribute the less to the quantized residual errors;
- the removal of the proportion of output channels includes:

  - providing:

■ a given order of development for the layers of the trained neural network; and
■ a computation budget corresponding to a function of a channel proportion and of the given order of development;

○ dividing the budget over the layers of the neural network into layer-wise channel proportions; and
○ removing for each respective layer the corresponding layer-wise channel proportion of output channels that contribute the less to the quantized residual errors for the respective layer;

- the neural network is a feed-forward neural network and the quantizing of the neural network comprises, for each respective layer of the neural network, separating the layer into:

○ one or more first independent quantized predictors each consisting of a respective part of the respective development of the respective layer, the one or more first independent predictors corresponding to consecutive parts of the respective development of the respective layer, and
○ a second independent quantized predictor corresponding to the development of a difference between the layer and the respective development of the layer at an order equal to the sum of the development orders of the first independent predictors,
the sum of the development orders of the independent predictors being equal to the development order of the respective development of the respective layer;

- the independent predictors have similar widths;
- the method further comprises pruning the quantized neural network;
- the quantization operator converts a first bit-wise representation into a lower second bit-wise representation, and:

○ the first bit-wise representation is a float representation; and/or
○ the second bit-wise representation is the int8 representation, the int6 representation, the int5 representation, the int4 representation, the int3 representation, the int2 representation, or the ternary representation; and/or

- the method further comprises performing a training of the quantized neural network.

It is further provided a neural network obtainable according to the method.
It is further provided a computer program comprising instructions for performing the method.
It is further provided a device comprising a data storage medium having recorded thereon the computer program and/or the neural network obtainable according to the method.
The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG.s 1 to 14 illustrate the method;

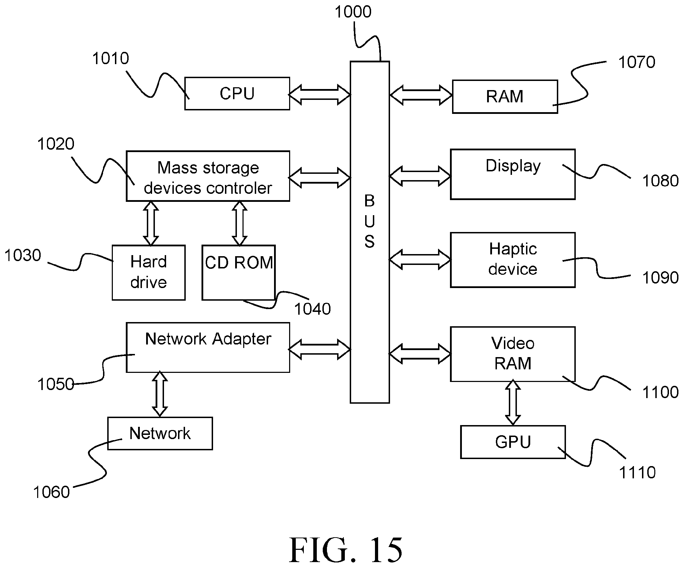

- FIG. 15 shows an example of the system.

## DETAILED DESCRIPTION

It is therefore provided a computer-implemented method for neural network quantization. The method comprises providing a trained neural network. The neural network has layers of weights. The method further comprises providing a quantization operator. The quantization operator reduces the number of bits of an input bit-wise representation. The method further comprises quantizing the neural network. The quantizing of the neural network includes, for each respective layer of one or more layers of the neural network, determining a respective development of the respective layer in a sum of quantized residual errors of the quantization operator.
The method constitutes an improved solution for machine-learning and neural networks.
Notably, the method allows for neural network quantization, i.e. the method quantizes a neural network (i.e. the provided trained neural network). For that the method takes as input a quantization operator (i.e. the provided quantization operator) and quantizes the layers of weights of the neural network using this quantization operators. The quantization operator reduces the number of bits of an input bit-wise representation, i.e. reduces the representation of an input in terms of bits. For example, the quantization operator may be a quantization operator that converts a first bit-wise representation into a lower second bit-wise representation, i.e. converts a first bit-wise representation requiring B bits into a second bit-wise representations requiring b bits with B>b. For example, the quantization operator may convert the floating point representation into any one of the int8 representation (8-bits integer representation), the int6 representation (6-bits integer representation), the int5 representation (5-bits integer representation), the int4 representation (4-bits integer representation), the int3 representation (3-bits integer representation), the int2 representation (2-bits integer representation), the binary representation, or the ternary representation (i.e. the representation where weights values are either -1, 0 or +1). Alternatively, the quantization operator may be a hybrid quantization operator where the number b depends on the neural network layer given as input to the operator (and may possible equal B for some layer(s)), i.e. the operator takes as input a B-bit bit-wise representation of any layer of the neural network and converts it into a b-bit bit-wise representation of the layer where b depends on the layer, i.e. the value of b is specific to the layer and is, for a given layer, lower or equal to B. Yet alternatively, the number b specific to the layer may vary among layers and also within any layer, e.g. may take different values for different residuals and/or sub-graphs. In any case, the quantization operator reduces the number of bits of an input bit-wise representation, the input being in the present case a bit-wise representation of any layer of weights of the neural network. Because the inference using a neural network such as a DNN principally relies on matrix multiplication, such quantization diminishes the number of bit-wise operations required for the inference, thus limiting the latency of the neural network. In other words, the method quantizes the neural network with the consideration that the neural network, once quantized, may be more efficiently encoded and used for inference in a computer, with less bit-wise operations required for inference. For example, an integer bit-wise representation requires less operations during inference than the floating-point representation.

Furthermore, not only does the method quantizes a neural network, but the method does so by developing one or more (e.g. all) layers of weights of the neural network, by determining respective developments the respective layers each in a sum of quantized residual errors of the quantization operator. In other words, the method not only quantizes the neural network's layers of weights, but decomposes one or more of them (e.g. all) each as a development of residual quantization errors. In addition, and as it will be shown hereinafter, the development converges towards the original weights with an exponential convergence with respect to the development order. In other words, the method refines the quantization provided as such by the application of the quantization operator by developing the quantizes weights into developments of residual quantization errors so that the developments form improved (i.e. more accurate) approximations of the weights than the sole application of the quantization operator. Thereby, the method allows to reduce the number of bit-wise operations required for applying the neural network for inference while ensuring a certain level of performance of the neural network during inference, i.e. while limiting the drop in accuracy that comes with the quantization.

Moreover, the method quantizes an already trained neural network (i.e. the provided trained neural network). The method thus performs a data-free quantization, i.e. the quantization does not require any training of the neural network, and thus does not require any training data, which may be unavailable. Training data may indeed be unavailable in a number of applications, due to privacy rights concerns and data privacy concerns, for example applications where data access is sensible or not possible (e.g. health and military services). The quantization of the neural network overcomes these problems by not requiring the training data for performing the quantization, so that the quantization is performed without any prior knowledge or assumption on the training data or task for which the neural network has already been trained.

This however does not exclude the method performing a training of the neural network *(e.g.* when training data is available), *e.g.* by any suitable training solution. The method may indeed in examples comprise performing a training of the neural network, for example by further training the already quantized neural network (e.g. by further training order of developments from scratch), by fine-tuning the parameters of the neural network (e.g. further to or during the quantization), or by training the neural network during the quantization (e.g. by training order of developments from scratch). For example, the method may comprise performing a quantized-aware-training of the neural network. In other words, even if the neural network is provided already trained, the method may in examples continue its training, during or after the quantization.

The improved quantization provided by the method allows to use the method in many industrial cases. The reduction in terms of bit-wise interactions provided by the method while ensuring a certain level of performance during inference allows the method to be used in cloud computing environment while reducing the clouds costs. The method also allows to improve neural networks for use, notably as they may be used for edge applications further to the execution of the method. All these benefits of the method are emphasized in examples, discussed hereinafter, where the method performs a group-sparsity development and/or an ensemble development. The ensemble development also allows the inference process using the neural network to be efficiently performed in parallel, as further discussed hereinafter.

It is further provided a neural network obtainable by the method, i.e. a computerized data structure forming a neural network of which weights are obtainable by the weight quantization that the method performs. This neural network may have been directly obtained by the method, i.e. the neural network is the provided trained neural network of which weights have been then modified by the method, including developments by the quantization performed by the method.

The method is now further discussed.

The method is a method of neural network quantization, i.e. the method takes as input a neural network (i.e. the provided trained neural network) and outputs a modified (i.e. quantized) neural network which is the input neural network with its layers of weights quantified by the method. For that the method provides a quantization operator. The quantization operators is an operator that reduces the number of bits of an input bit-wise representation. For example, the quantization operator may be a quantization operator that converts a first bit-wise representation into a lower second bit-wise representation, i.e. converts a first bit-wise representation requiring B bits into a second bit-wise representations requiring b bits with B>b. For example, the quantization operator may convert the floating point representation into any one of the int8 representation (8-bits integer representation), the int6 representation (6-bits integer representation), the int5 representation (5-bits integer representation), the int4 representation (4-bits integer representation), the int3 representation (3-bits integer representation), the int2 representation (2-bits integer representation), the binary representation, or the ternary representation (i.e. the representation where weights values are either -1, 0 or +1). Alternatively, the quantization operator may be a hybrid quantization operator where the number b depends on the neural network layer given as input to the operator (and may possible equal B for some layer(s)), i.e. the operator takes as input a B-bit bit-wise representation of any layer of the neural network and converts it into a b-bit bit-wise representation of the layer where b depends on the layer, i.e. the value of b is specific to the layer and is, for a given layer, lower or equal to B. Yet alternatively, the number b specific to the layer may vary among layers and also within any layer, *e.g.* may take different values for different residuals and/or sub-graphs. In any case, the quantization operator reduces the number of bits of an input bit-wise representation, the input being in the present case a bit-wise representation of any layer of weights of the neural network. The method also provides a trained neural network having layers of weights. The provided neural network is thus already trained, *i.e.* the weights of its layers have already been set/inferred beforehand, *i.e.* before performing the quantization that the method performs. The weights of the neural network may in examples have a symmetrical distribution. The providing of the neural network may comprise obtaining the neural network from a memory or database where it has been stored further to its training, for example by accessing said memory or said database. Alternatively or additionally, the method may comprise training the neural network, i.e. as an initial stage of the method. The neural network may be any neural network. For example, the neural network may be a Deep Neural Network (DNN) and/or a feed-forward neural network, for example deep feed-forward neural network. The neural network may have been trained (i.e. prior to the method or at an initial stage of the method) for any task, such as object detection, image classification, image segmentation, text-processing tasks (e.g. natural-language-processing), or sound- processing tasks. Since the neural network is already trained when the method is performed, the quantization performed by the method is data-free as previously explained, but this does not exclude the method performing optionally a training, as discussed hereinafter.

Further to the providing of the trained neural network and of the quantization operator, the method then comprises quantizing the neural network, i.e. performing a quantization of at least a part (e.g. all) of the weights of the neural network. The quantization includes, for each respective layer of one or more layers, quantizing the respective layer. In other words, the quantization quantizes one or more layers of the neural network, for example only a part of them (e.g. selected by a user) or, alternatively, all of them. In examples, the quantization quantizes all the layers. For each respective layer, quantizing the respective layer is performed by determining a respective development of the respective layer in a sum of quantized residual errors of the quantization operator. In other words, the determining of the respective development comprises:

- computing the quantization of the layer by the quantization operator, by applying the quantization operator; and
- developing the computed quantization in a sum of quantized residual errors of the quantization operator, up to a development order which may be respective to the respective layer or which may be fixed for all the quantized layers, by computing the quantized residual errors of the quantization operator up to the development order, the quantized residual errors corresponding to successive residual errors of the quantization.

It is to be understood that the result of the quantization of each respective layer is a corresponding respective quantized layer that replaced the respective layer, a quantized neural networked being thereby formed with the quantized layers replacing the original layers.

For the said each respective layer, the sum may include terms each of a respective order and respectively comprising the quantization operator multiplied by a residual quantization error at the respective order. In other words, for each quantized layer, the sum forming the respective development of the respective layer may include terms each of a respective order and respectively comprising the quantization operator multiplied by a residual quantization error at the respective order. The residual quantization error at the respective order may be the quantization operator applied to the difference between the weights of the layer and a sum of the inverses of the quantization operator applied to the residual quantization errors of lower respective orders, i.e. the latter sum consists in a sum of terms each being the inverse of the quantization operator applied to a certain residual quantization errors of a lower respective order. The latter sum may comprise the terms for each of the lower respective orders.

An example of the determining of the respective development of a respective layer is now discussed. The example applies to any respective layer. The example concerns the previously discussed case where the quantization operator is a quantization operator that converts, for any input layer, a first bit-wise representation of the layer with $B$ bits into a second bit-wise representation of the layer with b bits, with $B>b$. However, this example, and the mathematics and results (and their proofs) presented for this example, extend easily to the previously discussed case where the quantization operator is a hybrid quantization operator.

In this example, let F be the trained neural network with L layers of weights, and let $W_l$ be the weights of F. Let Q be the quantization operator that quantizes the weights $W_l$ from $[min\{W_l\}; max\{W_l\}] \subset \mathbb{R}$ to $I_q = [-2^{b-1}; 2^{b-1}-1] \cap Z$ and $W_l^q$ the quantized weights. Q is thus a $b$-bits quantization operator. In other words, the notation $Q(x) = x^q$ is used. The performing of the quantization comprises applying this operator Q separately to each respective layer of the said one or more layers, *e.g.* to all respective layer of the neural network. The operator is applied to columns of the weight matrices. For simplification, the notation of the layers with the index $l$ is dropped and let $(W)_i$ be the ith column of $W$, that is the ith of the said respective layer. The quantization operator yields:

$$(W^q)_i = Q((W)_i) = \left\lfloor \frac{(W)_i}{(\lambda)_i} \right\rceil \qquad (1)$$

where $\lfloor \cdot \rceil$ denotes the rounding operation and $(\lambda)_i$ is a column-wise rescaling factor selected such that each coordinate of $(W^q)_i$ falls in $I_q$, *i.e*

$$(\lambda)_i = \left\{ \frac{|min\{(W)_i\}|}{2^{b-1}} ; \frac{|max\{(W)_i\}|}{2^{b-1}-1} \right\}.$$

Let $Q^{-1}$ be the inverse quantization operator (i.e. the inverse of $Q)$. $Q^{-1}$ is defined as

$$Q^{-1}((W^q)_i) = (\lambda)_i (W^q)_i.$$

The quantization of a layer $f$ is then defined as:

$$f_q : x \mapsto \sigma\left(Q^{-1}\big(Q(W)Q(x)\big) + b\right)$$

where $\sigma$ is the activation function and b the bias, as known *per se* from the field of machine-learning and neural networks, and $Q(x)$ is the quantization of the input $x$. $Q(x)$ gives rise to a rescaling factor denoted $\lambda_x$. The matrix product $Q(W)Q(x)$ may be computer using lower bit-rise representations thanks to the quantization, but $Q^{-1}((W^q)_i) \neq (W)_i$. In other words, the quantization produces an error, and the method goes beyond computing the quantization of each respective layer by determining a development of the layer as a sum of quantized residual errors from the quantization.

Still in the currently discussed example, the residual error of the quantization is $(W - Q^{-1}(W^q))$. Let $R^{(1)} = W^q = Q(W)$ and

$$R^{(k)} = Q\left(W - \sum_{i=1}^{k-1} Q^{-1}\big(R^{(i)}\big)\right) \qquad (2)$$

$R^{(k)}$ is the kth residual development term, i.e. the kth quantized residual error, *i.e.* the residual quantization error at order k. $R^{(k)}$ corresponds to the residual error from $W - \sum_{i=1}^{k-1} Q^{-1}\left(R^{(i)}\right)$. Then the development of the respective layer *f* as a sum of quantized residual errors of the quantization is in the currently discussed example:

$$f^{(K)} : x \longmapsto \sigma \left( \sum_{k=1}^{K} R^{(k)} Q(x)\, \lambda_{R^{(k)}} \lambda_x + b \right) \qquad (3)$$

where $\lambda_a$ is the rescaling factor corresponding to the quantization of *a*, $\lambda_x$ and $\lambda_{R(k)}$ being thus rescaling factors corresponding to the rescaling of input *x* and $R^{(k)}$ respectively. *K* is the respective development order for the layer *f*. *K* may be common to all the quantized neural network and thus fixed *(e.g.* predefined, *e.g.* by a user, *e.g.* at an initial stage of the method). Alternatively, *K* may be respective to the layer *f, i.e.* other layers may have other development orders.

The following lemma holds for the developments according to the currently discussed example:

**Lemma 1:** Let *f* be a layer of real-valued weights W with a symmetric distribution. Let $R^{(k)}$ be the $k^{th}$ quantized weight from the corresponding residual error. Then the error between the rescaled $W^{(K)} = Q^{-1}(R^{(K)})$ and original weights W decreases exponentially, i.e.:

$$\left| \omega - \sum_{k=1}^{K} \omega^{(k)} \right| \leq \left( \frac{1}{2^{b-1}-1} \right)^{K-1} \frac{\left(\lambda_{R(K)}\right)_i}{2} \qquad (4)$$

where $\omega$ and $\omega^{(k)}$ denote the elements of W and $W^{(K)}$ and $(\lambda_{R(K)})_i$ denotes the column-wise rescaling factor at order *K* corresponding to $\omega$, as defined in equation (1).

Lemma 1 will be proven hereinafter. Lemma 1 implies that, in practice, a network can be quantized with high fidelity with only a few orders.

The method is now further discussed.

The quantizing of the neural network may in examples comprise removing a proportion of output channels that contribute the less to the quantized residual errors. This may include defining a certain proportion of output channels to remove and then identifying and removing, according to the proportion, the output channels which contribute the less to the quantized residual errors that are in the respective developments. This results in the quantized neural network being sparse, i.e. this results in a sparse version of the quantized neural network having its weights developed as discussed hereinafter, where the output channels contributing the less to the errors are removed (e.g. a predefined proportion of less contributing channels are removed). In other words, the method may in examples implement a *e.g.* structured pruning or unstructured group/block sparsity or semi structured splitting extension of the previously discussed development in residual quantization. This allows to reduce the number of computations made during use of the neural network for inference, since output channels are removed, while preserving the accuracy of the neural network, since only those output channels contributing the less to the quantized residual errors are removed. Furthermore, when this sparsity of the quantization residuals allows to select the level of sparsity in a very accurate manner (e.g. layer by layer, residual by residual) as a function of the inference time. The concept of output channel is known *per se* from the field of machine-learning and neural networks.

The removal of the proportion of output channels may include:

- providing (e.g. by a user):

    o a given order of development for the layers of the trained neural network, i.e. a given order of development common to all the quantized layers, *e.g.* the layers are development up to this order, for example all at this order or, alternatively, at or below this order; and
    o a computation budget corresponding to a function of a channel proportion and of the given order of development;

- dividing the budget over the layers of the neural network into layer-wise channel proportions, *e.g.* according to any suitable *(e.g.* ad-hoc) strategy; and
- removing for each respective layer the corresponding layer-wise channel proportion of output channels that contribute the less to the quantized residual errors for the respective layer.

The computation budget may be a bit-wise operations budget (i.e. a budget in terms of bit-wise operations) corresponding to *(e.g.* equal to) a *(e.g.* predefined, *e.g.* by a user) channel proportion multiplied by a term equal to the given order of development minus one. The computation budget may alternatively be a latency budget *(i.e.* a budget in terms of inference time) or a memory *(e.g.* footprint) budget or a complexity budget. Yet alternatively, the providing of the budget may comprise providing a bit-wise operations budget which is linked to the latency budget (resp. the memory budget, or the complexity budget), in terms of computer hardware that is used. This may include providing the latency budget (resp. the memory budget, or the complexity budget) and obtaining the bit-wise operations budget based on the computer hardware that is used.

An example of the removal of the proportion of output channels is now discussed. This example may be combined with any other example of the method discussed herein, including the previously discussed example of the determining of the respective development of a respective layer. The example concerns the previously discussed case where the quantization operator is a quantization operator that converts, for any input layer, a first bit-wise representation of the layer with *B* bits into a second bit-wise representation of the layer with b bits, with *B>b*. However, this example, and the mathematics and results (and their proofs) presented for this example, extend easily to the previously discussed case where the quantization operator is a hybrid quantization operator. In this example, the budget is a bit-wise operations budget.

Let $\gamma \in \, ]0,1]$ be the channel proportion, *i.e.* a *(e.g.* predefined, *e.g.* by a user) threshold parameter that defines, for the whole network, a proportion of channels to develop. Let *K* be the given order of development and $\beta = \gamma(K - 1)$ be the bit-wise operations budget.

The currently discussed example comprises dividing the budget over the layers by defining layer-wise thresholds such that

$$\sum_l |W_l| \gamma^l = \gamma \sum_l |W_l|$$

where $|W_l|$ denotes the number of scalar parameters in layer *l*. The strategy for dividing the budget in the currently discussed example may be a linear ascending function of *l*, *i.e.* $\gamma^l = al + \gamma^{l-1}$, with $a > 0$ and:

$$\begin{cases} a = \dfrac{(1-l)\sum_l |W_l|}{\sum_l l|W_l| - \sum_l |W_l|} \\ \gamma^1 = 1 - aL \\ \gamma^l = \text{clip}_0^1(al + \gamma^1) \end{cases} \tag{5}$$

with $\text{clip}_0^1$ is the clipping operator of bounds 0 and 1. This strategy favours the last layers which correspond to the largest layers. Other strategies may be used.

Still in the currently discussed example, let now $N_i^{(k)}$ denote the $L^1$ norm of an output channel i of the $k^{th}$ order residue $R^{(k)}$. The sparse residue is defined as

$$\left( R_\gamma^{(k)} \right)_i = \left( R^{(k)} \right)_i \cdot \mathbb{1}_\gamma^{(k)} \tag{6}$$

where · is the element-wise multiplication, $\mathbb{1}_{\gamma^l}^{(k)} = \mathbb{1}_{\left\{ N_i^{(k)} \geq \tau_{\gamma^l}^{(k)} \right\}}$ and $\tau_{\gamma^l}^{(k)}$ is a threshold defined as the $\gamma^l$ percentile of $N^{(k)}$. In other words, the currently-discussed example removes a proportion $\gamma^l$ of channels from residue $R^{(k)}$ that are the least important as indicated by their norm $N^{(k)}$. The method may however further encode these pruned channels in subsequent residuals $R^{(k')}$, with $k' > k$. The result from Lemma 1 then becomes in this example:

**Lemma 2:** Let *f* be a layer of real-values weights W with a symmetric distribution. Then

$$\left| \omega - \left( \sum_{k=1}^{K-1} \omega^{(k)} + Q^{-1}\left(R_\gamma^{(k)}\right) \right) \right| \leq \frac{\left\| N^{(K)} \cdot \mathbb{1}_\gamma^{(K)} \right\|_\infty \left(\lambda_{R^{(K)}}\right)_i}{(2^{b-1}-1)^K 2} \tag{7}$$

where $\|\cdot\|_\infty$ is the infinite norm operator with the convention that $\|0\|_\infty = 1$ and $(\lambda_{R(K)})_i$ denotes the column-wise rescaling factor at order $K$ corresponding to $\omega$.

A proof of Lemma 2 will be provided hereinafter. Using this sparse version of the development in residual errors of the provided neural network allows to adjust the number of computations to suit the budget $\beta$. This allows to find the optimal values for $K$ and $\gamma$ given the budget $\beta$. In that respect, the following result holds:

**Lemma 3:** Let $f$ be a layer of real-values weights W with a symmetric distribution. Then, for $K_1 < K_2$ two integers,

$$Err\left( R^{(1)} + \sum_{k=2}^{K_1} R_{\gamma_1}^{(k)} \right) \geq Err\left( R^{(1)} + \sum_{k=2}^{K_2} R_{\gamma_2}^{(k)} \right) \tag{8}$$

where $Err$ is the quantization error (*i.e.* the absolute difference between the quantized and original weights, as in equation (4)), and $K_1\gamma_1 = K_2\gamma_2 = \beta$.

A proof of lemma 3 will be provided hereinafter. The lemma motivates the use of high ordered, spare, residual developments.

The method is now further discussed.

The neural network may be a feed-forward neural network (*e.g.* a deep feed-forward neural network) and the quantizing of the neural network may in this case comprise, for each respective layer of the neural network (i.e. each layer which is quantized), separating the layer into:

- one or more first independent quantized predictors each consisting of a respective part of the respective development of the respective layer, the one or more first independent predictors corresponding to consecutive parts of the respective development of the respective layer, and
- a second independent quantized predictor corresponding to the development of a difference between the layer and the respective development of the layer at an order equal to the sum of the development orders of the first independent predictors.

The sum of the development orders of the independent predictors are equal to the development order of the respective development of the respective layer.

In other words, in this case, the quantizing of each respective layer of the neural network comprises, for each respective layer of one or more (e.g. all) layers of the neural network:

- determining the respective development of the layer up to an order $K$, where $K$ may be predefined, *e.g.* by a user, and common to each quantized layer, or, alternatively, be determined during an optimization due to a fixed computation budget (e.g. in terms of bit-wise operations, latency, or memory footprint, as previously discussed);
- separating the developed layer into $m$ quantized predictors, where the first predictor corresponds to the respective development up to an order $K_1$, where the second predictor corresponds to the respective development between order $K_1$ and $K_2$, with $K_2 > K_1$, where the third predictor corresponds to the respective development between order $K_2$ and $K_3$, with $K_3 > K_2$, and so on, where the $(M-1)^{th}$ predictor corresponds to the respective development between order $K_{M-2}$ and $K_{M-1}$, with $K_{M-1} > K_{M-2}$, and where the $M^{th}$ predictor is the development at order $K_M$ of the difference between the respective development at order K of the respective layer and the respective development at order $\sum_{m=1}^{M-1} K_m$ of the respective layer, with $\sum_{m=1}^{M} K_m = K$. The number $M$ may be common to each quantized layer. M may equal 2 or may be larger than 2. Additionally or alternatively, $K_1$ may be larger than 1, for example larger than 2, for example larger than 3, for example larger than 4. In examples, the sparsity and/or the order of quantization may differ between each quantized predictor.

The independent predictors $K_i$ are the widths of the respective predictors and may be similar. In other words, the independent predictors may have similar widths, *e.g.* equal widths or widths that differ only by 2 or less than 2, *e.g.* 1.

This separation of a quantized layer into independent quantized predictors allows to replace the quantized layer by the independent quantized predictors without significant impact on the inference (this will be shown hereinafter). In other words, inference accuracy tends to be preserved. However, the independent predictors lead to independent computations, and thus to independent computation instructions sent to the computer. In other words, rather than the single computation instruction that corresponds to applying the whole quantized layer, several independent computation instructions are sent to the computer which each correspond to the application of one predictor. This allows parallelization of the computations done for applying the layer in that the computer is provided with several smaller independent computation instructions that may be executed more frequently in the task list of the computer than would be the single instruction computation corresponding to the application of the whole quantized layer. Having predictors of similar widths further improves this parallelization as the several independent instructions have thereby similar sizes and thus are treated with similar frequencies in the task list of the computer. This separation into an ensemble of independent quantized predictors which replace the corresponding layer(s) may be referred to as "ensemble development" or "ensembling".

In examples, all the layers of the neural network are quantized with a same development order K and then separated with a same number of quantized predictors and with the same numbers $K_m$. The method may then gather all the predictors for all the layers to form said same number of independent quantized neural network replacing the provided trained neural network and sum their outputs. The application of these independent quantized network during inference may be implemented in parallel (i.e. on a parallel computing architecture, such as on several processors or on a multi-core processor).

An example of the separating is now discussed. This example may be combined with any other example of the method discussed herein, including the previously discussed example of the determining of the respective development of a respective layer and the previously discussed example of the removal of the proportion of output channels. The example concerns the previously discussed case where the quantization operator is a quantization operator that converts, for any input layer, a first bit-wise representation of the layer with *B* bits into a second bit-wise representation of the layer with b bits, with *B>b*. However, this example, and the mathematics and results (and their proofs) presented for this example, extend easily to the previously discussed case where the quantization operator is a hybrid quantization operator.

Let *f* be a feed-forward *(e.g.* deep) neural network with two layers $f_1$ and $f_2$, and $\sigma$ a piece-wise affine activation function (e.g. the rectified linear activation function (ReLU)). Given $\left(R_1^{(k)}\right)_{k=1\ldots K}$ and $b_1$ the kernel and bias weights of the first layer $f_1^{(K)}$, let $\left(R_1^{(k)}\right)_{k\in\{1\ldots K\}}$ be the quantized residual errors up to the order *K* as defined in equation (3). Lemma 1 implies that the first terms in the development sum, *i.e.* corresponding to the lower values of *k,* are preponderant in the pre-activation term. Thus, there exits $K_1 < K$ such that $f_1^{(K)} \approx \tilde{f}_1^{(K)} = \tilde{f}_{1,1}^{(K)} + \tilde{f}_{1.2}^{(K)}$ with:

$$\begin{cases} \tilde{f}_{1,1}^{(K)}: x \longmapsto \sigma\left(\sum_{k=1}^{K_1} R_1^{(k)} x^q \, \lambda_{R_1^{(k)}}\lambda_x + b_1\right) \\ \tilde{f}_{1.2}^{(K)}: x \longmapsto \sum_{k=K_1+1}^{K} R_1^{(k)} x^q \, \lambda_{R_1^{(k)}}\lambda_x \end{cases} \qquad (9)$$

Furthermore, $f^{(K)}: x \longmapsto f_2^{(K)}\left(f_1^{(K)}(x)\right)$. Let $R_2^{(k)}$ and $b_2$ respectively denote the kernel and bias weights of the second layer $f_2^{(K)}$. By linearity of the last layer:

$$f^{(K)} \approx \tilde{f}^{(K)} = \sum_{k=1}^{K} R_2^{(k)} \tilde{f}_{1,1}^{(K)} \lambda_{R_2^{(k)}} \lambda_{\tilde{f}_{1,1}^{(K)}} + b_2 + \sum_{k=1}^{K} R_2^{(k)} \tilde{f}_{1,2}^{(K)} \lambda_{R_2^{(k)}} \lambda_{\tilde{f}_{1,2}^{(K)}} \qquad (10)$$

It stems from this formulation that the quantized neural network $f^{(K)}$ may be expressed as an ensemble of quantized neural networks which share a similar architecture, *i.e.* $f^{(K)} \approx \tilde{f}^{(K)} = g^{(K)} + \tilde{h}^{(K)}$. This defines the ensemble development from residual errors of order K.

This may be generalized then to any feed-forward neural network $f$ with $L > 2$ layers and activation functions $\sigma_1, ..., \sigma_{L-1}$. In such a case, equation (3) becomes:

$$f_L^{(K)}\left(X_{f_{L-1}^{(K)}}\right) = \sum_{k=1}^{K} R_L^{(k)} X_{f_{L-1}^{(K)}} \lambda_{R_L^{(k)}} \lambda_{f_{L-1}^{(K)}} + b_L \qquad (11)$$

where $X_{f_{L-1}^{(K)}} = f_{L-1}^{(K)} \circ ... \circ f_1^{(K)}(x)$. The generalization may be done by reasoning by induction on the layer L - 1. Similarly to the two-layer case, one assumes that there are $\tilde{g}_{L-2}^{(K)}, ..., \tilde{g}_1^{(K)}$ and $\tilde{h}_{L-2}^{(K)}, ..., \tilde{h}_1^{(K)}$ such that:

$$f_{L-2}^{(K)} \circ ... \circ f_1^{(K)}(x) \approx \tilde{g}_{L-2}^{(K)} \circ ... \circ \tilde{g}_1^{(K)}(x) + \tilde{h}_{L-2}^{(K)} \circ ... \circ \tilde{h}_1^{(K)}(x) \qquad (12)$$

To simplify the composition notations, let $X_f$ denote the input of a function $f$. With this convention, equation (10) becomes in the general case

$$\begin{cases} \tilde{f}^{(K)} \approx \sum_{k=1}^{K} R_L^{(k)} \tilde{f}_{L-1}^{(K)}(x) \lambda_{R_L^{(k)}} \lambda_{\tilde{f}_{L-1}^{(K)}} + b_L \\[2mm] \tilde{f}_{L-1}^{(K)}(x) = \tilde{g}_{L-1}^{(K)}\left(X_{\tilde{g}_{L-1}^{(K)}}\right) + \tilde{h}_{L-1}^{(K)}\left(X_{\tilde{h}_{L-1}^{(K)}}\right) \\[2mm] \tilde{g}_{L-1}^{(K)}\left(X_{\tilde{g}_{L-1}^{(K)}}\right) = \sigma_{L-1}\left(\sum_{k=1}^{K_1} R_{L-1}^{(k)} \tilde{g}_{L-2}^{(K)}\left(X_{\tilde{g}_{L-2}^{(K)}}\right) \lambda_{R_{L-1}^{(k)}} \lambda_{\tilde{g}_{L-2}^{(K)}} + b_{L-1}\right) \\[2mm] \tilde{h}_{L-1}^{(K)}\left(X_{\tilde{h}_{L-1}^{(K)}}\right) = \sigma_{L-1}\left(\sum_{k=K_1+1}^{K} R_{L-1}^{(k)} \tilde{h}_{L-2}^{(K)}\left(X_{\tilde{h}_{L-2}^{(K)}}\right) \lambda_{R_{L-1}^{(k)}} \lambda_{\tilde{h}_{L-2}^{(K)}}\right) \\[2mm] X_{\tilde{g}_{L-1}^{(K)}} = \tilde{g}_{L-2}^{(K)} \circ ... \circ \tilde{g}_1^{(K)}(x) \\[2mm] X_{\tilde{h}_{L-1}^{(K)}} = \tilde{h}_{L-2}^{(K)} \circ ... \circ \tilde{h}_1^{(K)}(x) \end{cases} \qquad (13)$$

$\tilde{g}_{L-1}^{(K)}$ and $\tilde{h}_{L-1}^{(K)}$ are obtained by applying equation (10) two times, on $g_{L-2}^{(K)}$ and $h_{L-2}^{(K)}$ independently. This will be further discussed hereinafter.

The above shows that $f^{(K)}$ can be expressed as the sum of two quantized neural networks $\tilde{g}$ and $\tilde{h}$. The first predictor $\tilde{g}$ is equal to the development $\tilde{f}^{(K_1)}$ of $f$ at order $K_1$ while $h$ is equal to the development of $f^{(K)} - f^{(K_1)}$ at order $K - K_1$. This result may be extended to rewrite $f$ as an ensemble of M predictors, by selecting $K_1, ..., K_M$ such that

$\sum_{m=1}^{M} K_m = K$ : in such a case, the $M$th predictor is the development of $f^{(K)} - f^{(\sum_{m=1}^{M-1} K_m)}$ at order $K_M$. The following lemma holds.

**Lemma 4:** Let $f$ be a $L$ layers feed-forward neural network with activation function $\sigma_1 = \cdots = \sigma_{L-1} = ReLU$. The expected error $\mathbb{E}\left[\|f^{(K)} - \tilde{f}^{(K)}\|\right]$ due to the ensemble development of order $K$ and M predictors, is bounded by $U$ which can be approximated as

$$U \approx \frac{\sum_{k=1}^{K}\left\|R_L^{(k)}\right\|}{2^{L-1}} \sum_{m=1}^{M-1} \prod_{l=1}^{L-1} \sum_{k=K_m}^{K_{m+1}} \left\|R_L^{(k)}\right\| \lambda_{\tilde{h}_l^{(K)}} \qquad (14)$$

The definition of $U$ as well as a proof of Lemma 4 will be discussed hereinafter. The Lemma 4 shows that any neural network may be approximated by an ensemble development of quantized networks, with theoretical guarantees of the approximation error. In practice, this even leads to superior performances in term of accuracy-inference time trade-of.

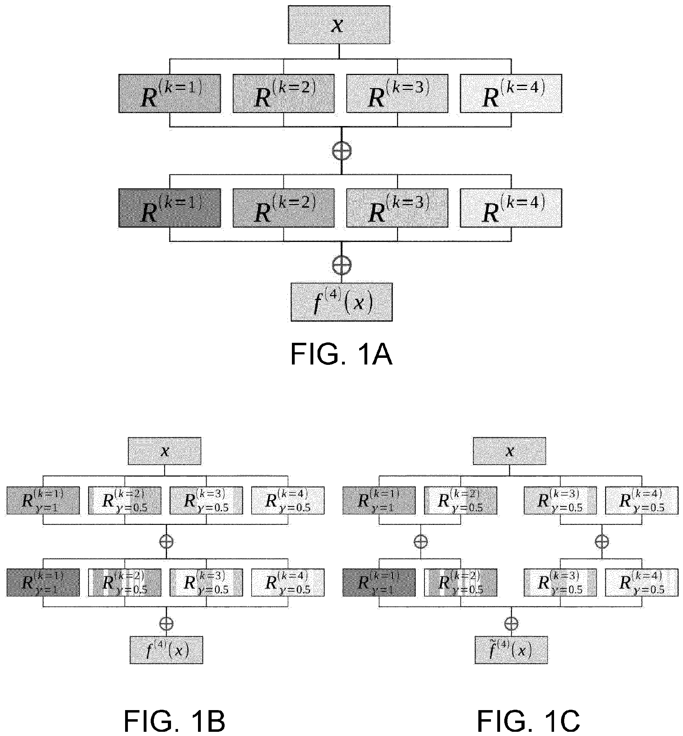

FIG.s 1A-1C illustrate examples of the method. FIG. 1A shows an illustration of a development of residual errors at order 4: the intensity of the greyscale indicates the magnitude of the residual error. FIG. 1B shows an illustration of a group-spare development for orders $k \geq 1$ ($\gamma = 50\%$ sparsity). FIG. 1C shows an illustration of an ensemble development with two predictors approximating the spare development of FIG. 1B.

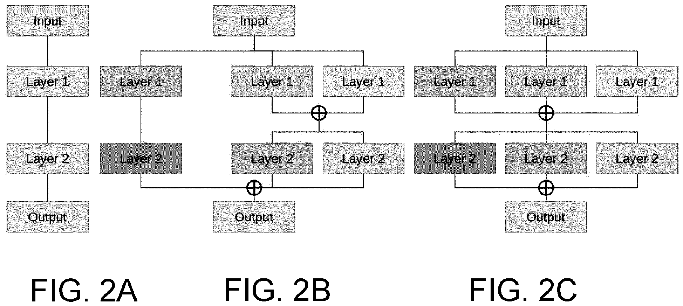

FIG.s 2A-2C illustrate the difference between the development of residual errors and the ensemble development of residual errors, where FIG. 2A illustrates the full original neural network, FIG. 2B illustrates the development of residual errors, and FIG. 2C illustrates the ensemble development of residual errors.

Experiments and experimental results of examples of the method are now discussed. These experiments concern the previously discussed case where the quantization operator is a quantization operator that converts, for any input layer, a first bit-wise representation of the layer with $B$ bits into a second bit-wise representation of the layer with b bits, with $B>b,$ and where the budget is a bit-wise operations budget.

Table 1 below illustrates the trade-of between the accuracy on ImageNet of a ResNet 50 and a MobileNet v2 and the number of bit-wise operations in different development orders $K$ (full order, *i.e.* $\gamma = 1$) and number of bits b for standard bit representations ($b \geq 3$). In most cases, it is observed a systematic convergence to the full-precision accuracy with second order developments $K = 2$. However, *e.g.* on MobileNet with b = 3,4, setting $K \geq 3$ allows to reach the full precision. This illustrates the exponential convergence with respect to the development order, as stated in Lemma 1.

*Table 1 : Top1 accuracy (in percentage) on imageNet for different development order K and quantization (number of bits b) setups. Bold results correspond to an accuracy that reaches the full precision model.*

| architecture | b | K=1 | K=2 | K=3 |
|---|---|---|---|---|
| MobileNet v2 | 8 | 71.00 | **71.80** | **71.80** |
| | 6 | 52.75 | **71.80** | **71.80** |
| | 4 | 0.23 | 68.80 | **71.80** |
| | 3 | 0.11 | 36.98 | **71.80** |
| ResNet 50 | 8 | 75.40 | **76.15** | **76.15** |
| | 6 | 73.00 | **76.15** | **76.15** |
| | 4 | 0.10 | **76.15** | **76.15** |
| | 3 | 0.11 | **76.15** | **76.15** |

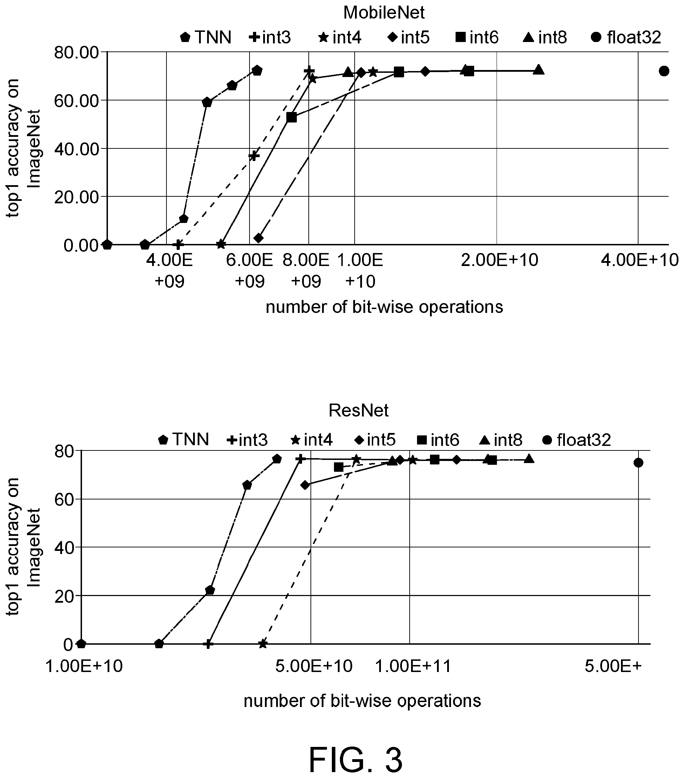

One more challenging benchmark for quantization methods is ternary quantization, where weights are either -1, 0 or 1 or 1: in such a case, higher values of K are required in order to reach the full-precision accuracy. This is illustrated on FIG. 3, which shows the accuracy vs. the number of bit-wise operations achieved by different values of k and b. Comparison of the developments at orders 1 to 3 are shown for int3, int4, int5, int6 and int8 quantization as well as the ternary quantization of higher orders (K = 5; 6, respectively for ResNet 50 and MobileNet v2) The lines for TNN correspond to different developments with $\gamma = 1$ in the case of ternary quantization. Here again, the ternary-quantized models reach the full precision with K = 5; 6 respectively for ResNet 50 and MobileNet v2. This setting constitutes a good trade-off between accuracy and number of bit-wise operations.

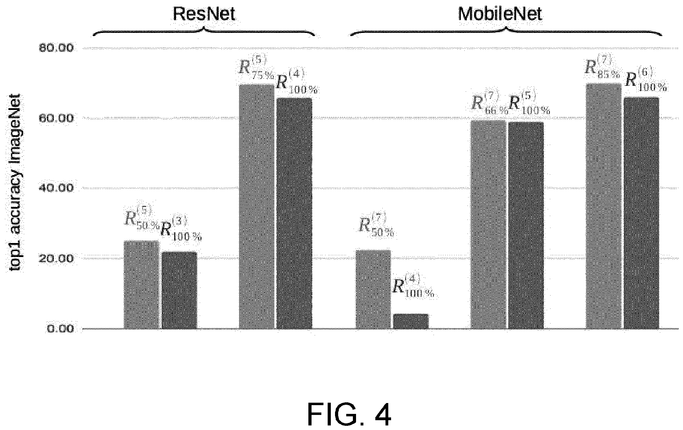

As stated in Lemma 3, given a specific budget, using higher order sparse residual developments allows to find an improved accuracy vs. number of bit-wise operations trade-of. FIG. 4 draws a comparison between full orders and sparse (higher) orders for an equivalent budget: in every case, the sparse, high-order development achieves greater accuracy than the full, (comparatively) lower-order one: e.g. ResNet 50 with $R_{75\%}^{(5)}$ achieves 69.53% top-1 accuracy vs 65.63% for $R_{100\%}^{(4)}$; MobileNet v2 with $R_{85\%}^{(7)}$ achieves 69.88% top-1 accuracy vs 65.94% for $R_{100\%}^{(6)}$. The robustness to the value $\gamma$ will be discussed hereinafter.

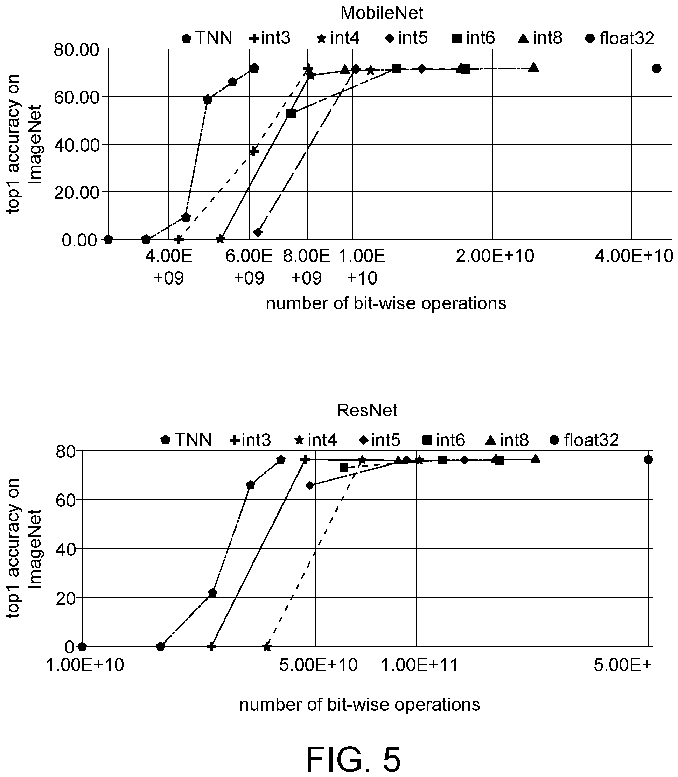

FIG. 5 shows a comparison between the full development (referred to as "DRE") using various settings) with the baseline $R^{(1)}$, the sparse second order development $R^{(2)}$, and the state-of-the-art data-free quantization methods OCS, DFQ, SQNR and MixMix. First, it is observed that there exists a set-up K, $\gamma$ and b such that the accuracy from DRE significantly outperforms other existing methods while using the same number of bit-wise operations. In other words, given a budget of bit-wise operations, DRE can achieve higher accuracy than existing approaches: e.g. on MobileNet V2, with $7.37 \times 10^9$ bit operations, DRE outperforms DFQ by 2.6 points, using b = 4, K = 2 and y= 75%. On ResNet 50, with $3.58 \times 10^{10}$ bit operations, DRE outperforms OCS by 33.5 points in accuracy, using b = 3, K = 2 and $\gamma$ = 50%.

Second, DRE achieves the objective of restoring the full precision accuracy at a far smaller cost in terms of bit-wise operations. For instance, on MobileNet V2, DRE reaches 71.80 accuracy at $6.77 \times 10^9$ bit-wise operations while SQNR, OCS and DFQ need $9.75 \times 10^9$ operations, i.e. 44% more operations. This is emphasized on ResNet 50, as DRE reaches 76.15 accuracy at $3.93 \times 10^{10}$ bitwise operations while SQNR, OCS and DFQ need $8.85 \times 10^{10}$ operations, i.e. 225% more operations.

Overall, it is observed that DRE is flexible and works well with various configurations, particularly on lower bit representations. As stated before (see Lemma 1), given a fixed budget, DRE works best using high orders (high values of K) and sparse orders (low $\gamma$). Therefore, intuitively, the lower the bit-representation b the more fine-grained the possible budgets: this explains why DRE performs better and is more flexible using ternary weights with sparse higher order developments. For instance, on MobileNet, any values of the budget $\beta$ greater than 6.1 will reach the full-precision accuracy with ternary weight representations. On ResNet, any value of $\beta$ greater than 4 allows to reach the full-precision accuracy with ternary weights.

One may refer to reference Ritchie Zhao, Yuwei Hu, Jordan Dotzel, Chris De Sa, and Zhiru Zhang, Improving neural network quantization without retraining using outlier channel splitting, In ICML, pages 7543-7552, 2019 for the OCS method, to reference Markus Nagel, Mart van Baalen, et al, Data-free quantization through weight equalization and bias correction, In ICCV, pages 1325-1334, 2019, for the DFQ method, to reference Eldad Meller, Alexander Finkelstein, Uri Almog, and Mark Grobman, Same, same but different: Recovering neural network quantization error through weight factorization, in ICML, pages 4486-4495, 2019 for the SNQR method, and to reference Yuhang Li, Feng Zhu, Ruihao Gong, Mingzhu Shen, Xin Dong, Fengwei Yu, Shaoqing Lu, and Shi Gu, Mixmix: All you need for data-free compression are feature and data mixing, in ICCV, pages 4410-4419, 2021 for the MixMix method.

It is now discussed experiments related to ensemble development. It is now considered quantized developments of networks with M predictors such that $\sum_{m=1}^{m} K_m = K$ ($K_1$ denoting the number of orders within the first predictor in the ensemble) and $\gamma$ the sparsity factor. The larger $K_1$, the lower the difference between the ensemble $\tilde{f}^{(k)}$ and the developed network $\tilde{f}^{(k)}$. On the other hand, the more balanced the elements of the ensemble the more runtime-efficient the ensemble development: thus, $K_1$ may be fixed carefully so that the ensemble runs faster than the developed network, without too much accuracy loss. Fortunately, the accuracy behaviour with respect to the value of $K_1$ may be estimated from the values of the upper bound $U$ (Lemma 4) on the expected error from ensembling $\mathbb{E}[\|f^{(K)} - \tilde{f}^{(K)}\|]$.

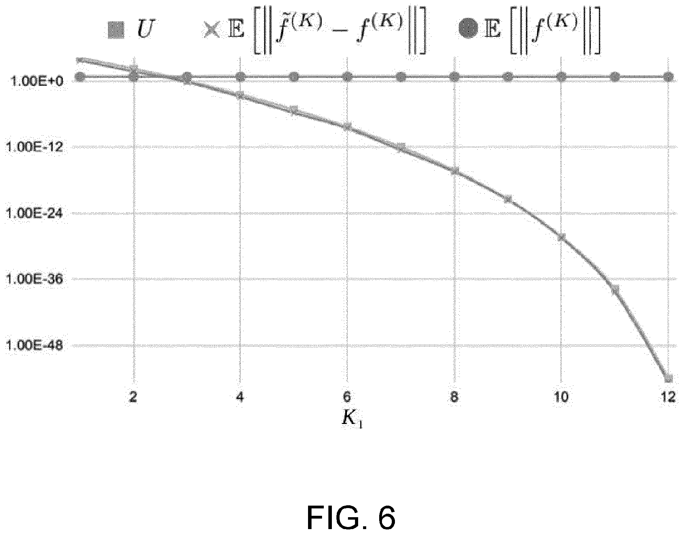

FIG. 6 shows a comparison between the expected empirical error from ensembling $\mathbb{E}[\|f^{(K)} - \tilde{f}^{(K)}\|]$ and its upper bound $U$ (Lemma 4) for different values of $K_1$ on a ResNet 50 trained on ImageNet and quantized with ternary values and K = 13, $\gamma$ = 25%. The logits $\mathbb{E}[\|f^{(K)}\|]$ is also plotted, for reference.

As illustrated on FIG. 6, in the case of ternary quantization, the upper bound U is relatively tight and collapses more than exponentially fast with respect to $K_1$. For instance, if $K_1 \leq 2$, U is significantly larger than the amplitude of the logits $\mathbb{E}[\|f^{(K)}\|]$ and the accuracy is at risk of collapsing. Similarly, when U vanishes when compared to $\mathbb{E}[\|f^{(K)}\|]$, the ensemble and regular developments are guaranteed to be almost identical, thus the accuracy is preserved. Thus, the upper bound U and the empirical norm of the logits may be directly compared from the from the development $\mathbb{E}[\|f^{(K)}\|]$ to assess the validity of a specific ensemble development. Additionally, $\mathbb{E}[\|f^{(K)}\|]$ may be estimated using statistics from the last batch normalization, hence this criterion is fully data-free.

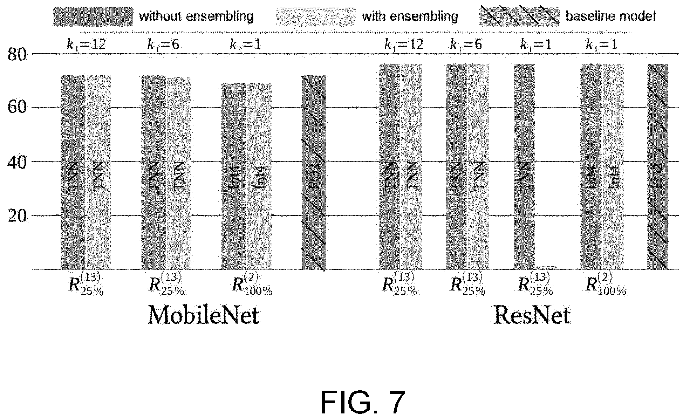

FIG. 7 shows a comparison of the top-1 accuracies of $\tilde{f}^{(K)}$ and $f^{(K)}$ for different architectures (MobileNet v2 and ResNet 50) and quantization configurations. The ensemble development systematically matches the accuracy of the developed network in terms of accuracy, except in the case of ternary quantization when $K_1 = 1$ (see above). This is remarkable as ensembling significantly decreases the inference time with such a simple two predictor configuration. On FIG. 7 different bit representations are tested, namely ternary (TNN) and int4 as well as different values for $K_1$. Except for very low values the ratio $K_1/K$, the robustness of the ensembling method is observed.

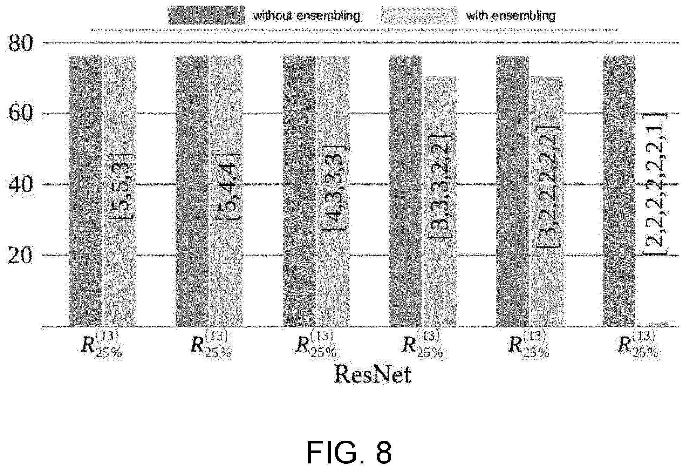

FIG. 8 shows the results obtained on ImageNet with larger ensembles of smaller quantized predictors, i.e. with M > 2. The full preservation of the accuracy of the developed network is observed as long as $K_1 \geq 4$ and a loss of 6 points for balanced ensembles of 5 - 6 predictors and $K_1 = 3$. Here again, with M = 7 and $K_1 = 2$, the accuracy is very low, as predicted previously. To sum it up, ensembling developed networks allows to significantly decrease the inference time, with theoretical guarantees on the accuracy preservation.

Table 2 below shows the run-time of a ResNet 50 for a full evaluation on the validation set of ImageNet (50,000 images). The models have been benchmarked on different devices (CPU/GPU) using a fixed budget $\beta = 7$ and order K = 8, and ensembles developments are compared (with either 2 [4, 4], 3 [3, 3, 2] and 4 [2, 2, 2, 2] predictors). It is observed that the ensembles are significantly (up to 10 times) faster on each device than the baseline development.

Table 2 : Comparison of the evaluation time in minutes of aResNet 50 over the validation set of ImageNet using a development of order k = 8 with ensembling ofm predictors (m ∈ {1,2,3,4}) The setups are distinguished by reporting the values of [$K_1$, ..., $K_m$].

| Device | [8] | [4,4] | [3,3,2] | [2,2,2,2] |
|---|---|---|---|---|
| Intel(R) i9-9900K | 215 | 54 | 26 | 26 |
| Ryzen 3960X | 122 | 30 | 23 | 22 |
| RTX 2070 | 41 | 17 | 5 | 5 |
| RTX 3090 | 44 | 16 | 4 | 4 |

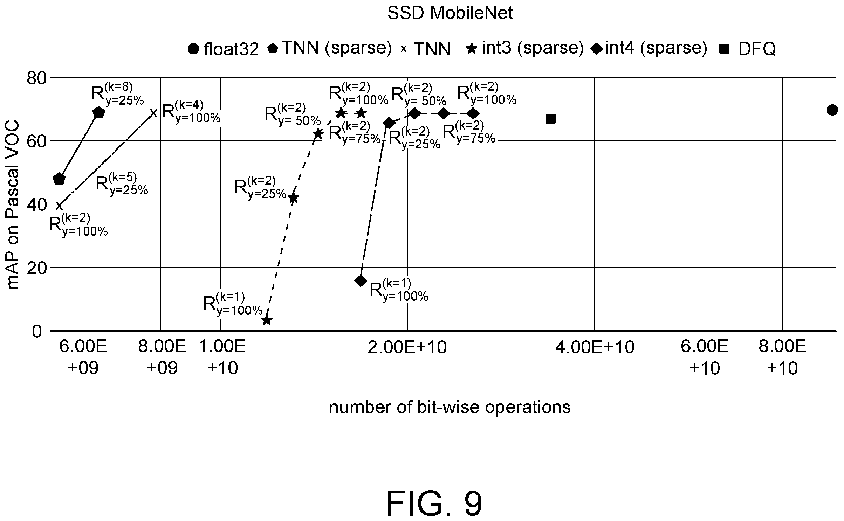

FIG. 9 illustrates the performance of DRE (as well as DFQ for int8 quantization) using SSD-MobileNet as a base architecture for object detection. Overall, it is observed a similar trend as in FIG. 5 for classification: DRE allows to reach significantly lower numbers of bit-wise operations than state-of-the-art DFQ when preserving the full model accuracy is a concern, using either int4, int3 or ternary quantization. Also, once again, the best results are obtained using ternary quantization with high orders (e.g. k = 8) and sparse residuals (e.g. $\gamma$ = 25%): as such, the mAP of the best tested configuration, $R_{25\%}^{(8)}$, reaches 68.6% for 6.38e9 bit-wise operations, vs. 67.9% for 3.36e10 bit-wise operations for DFQ. On FIG. 9, Mean average precision (mAP) of a MobileNet V2 SSDlite on Pascal VOC object detection task is illustrated. The performance of a data-free quantization solution, DFQ, is added for comparison.

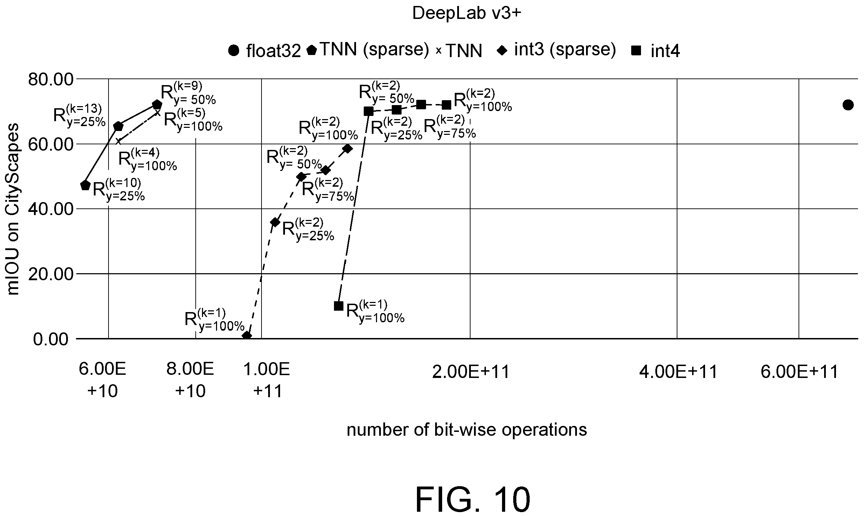

FIG. 10 illustrates the performance of DRE for image segmentation using a deepLab v3+ architecture. Similarly to the previous tasks, it is observed that DRE is able to very efficiently quantize a semantic segmentation network, wether it is in int4 or higher (where order 2 is sufficient to reach the full precision mIoU), or in int3/ternary quantization. In the latter case, once again, it is better to use sparse, high order developments: for instance, w the full precision accuracy may be retrieved using $R_{50\%}^{(9)}$ and ternary quantization and divide by a factor 10 the number of bit-wise operations as compared to the original, full precision model. This demonstrates the robustness of DRE to the task and architecture. On FIG. 10, it is shown a mean intersection over union (mIOU) of a Deeplab V3+ with MobileNet V2 backbone on CityScapes segmentation task.

Proofs and explanations for Lemmas and other mathematical aspects that have been previously discussed are now given.

## Proof of Lemma 1:

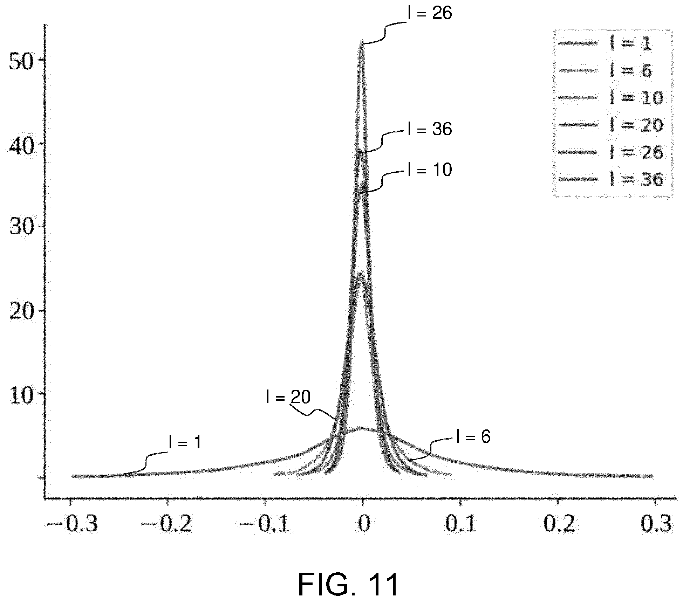

Before detailing the proof, the motivation behind the assumption of symmetry over the weight values distribution is now briefly discussed. FIG. 11 illustrates the motivation. FIG. 11 shows the distributions of the weights of several layers of a ResNet 50 trained on ImageNet. It is observed that every distribution is symmetric around 0. The assumption is clearly satisfied in practice.

The proof of Lemma 1 is now given.

Assuming that K = 1, then $W^{(1)}$ is the result of the composition of inverse quantization operator and quantization operator, *i.e.* $W^{(1)} = \lambda \left\lfloor \frac{W}{\lambda} \right\rceil$ . By definition of the rounding operator, $\lfloor a \rceil - a | \le 0.5$. Thus $\lfloor \omega \rceil - \omega^{(1)} | \le \lambda/2$. Now in the case $k = 2$, one has by definition of the quantization of the residual error and the property of the rounding operator

$$\left| \left\lfloor \frac{\omega - \omega^{(1)}}{\lambda^{(2)}} \right\rceil - \frac{\omega - \omega^{(1)}}{\lambda^{(2)}} \right| \le \frac{1}{2} \qquad (15)$$

where $\lambda^{(2)}$ is the rescaling factor in the second order residual $R^2$ computed from $\omega - \omega^{(1)}$. The quantized weights are thus given by:

$$\left| \omega - \sum_{i=1}^{2} \omega^{(i)} \right| \le \frac{\lambda^{(2)}}{2} \qquad (16)$$

Because the weight distribution is symmetric, then for any *k*,

$$\lambda^{(K)} = \frac{max\left\{ \omega - \sum_{k=1}^{K-1} \omega^{(k)} \right\}}{2^{b-1} - 1}.$$

Also, by definition, $max\left\{ \omega - \sum_{k=1}^{K-1} \omega^{(k)} \right\} \le \lambda^{(K-1)}$ . Thus:

$$\left| \omega - \sum_{k=1}^{2} \omega^{(k)} \right| \le \left( \frac{1}{2^{b-1} - 1} \right) \frac{\lambda}{2} \qquad (17)$$

The proof is concluded by using an induction proof.

As a consequence, the following holds which justifies the development appellation:

**Corollary 1:** Let *f* be a layer of real-valued weights *W* with a symmetric distribution and $R^{(k)}$ the $k^{th}$ quantized weight from the corresponding residual error. Then,

$$\mathbb{E}\left[ \left\| f - \sum_{k=1}^{K} f^{(k)} \right\| \right] \ge \mathbb{E}\left[ \left\| f - \sum_{k=1}^{K+1} f^{(k)} \right\| \right] \qquad (18)$$

and

$$f = \sum_{k=1}^{\infty} f^{(k)}.$$

The first inequality (18) results from detailing the induction in the proof of Lemma 1. Instead of an upper bound on the error over all the scalar values, each error is considered, and one shows using the same properties that they go down after each step. Then $f = \sum_{k=1}^{\infty} f^{(k)}$ is a direct consequence of equation (4).

**Proof of Lemma 2:**

From equation (4), one has

$$\left| \omega - \left( \sum_{k=1}^{K-1} \omega^{(k)} + Q^{-1}\left(R_1^{(K)}\right) \right) \right| \leq \frac{\left(\lambda_{R^{(K)}}\right)_i}{2} \left( \frac{1}{2^{b-1}-1} \right)^K \qquad (18)$$

which corresponds to the case where $\gamma^l = 1$. If $\gamma^l < 1$, one has two possibilities for $\omega$. First, the coordinate in $N^{(K)}$ associated to is greater than $\tau_{\gamma^l}^{(K)}$ then one falls in the case where $R_\gamma^{(K)} = R^{(K)}$ and as such one has the result from equation (4) which is strongerthan equation (7). Second, the coordinate in $N^{(K)}$ associated to is lowerthan $\tau_{\gamma^l}^{(K)}$. Then one has that the difference between the baseline weight $\omega$ and the slim development is bounded by the development of lower order and the maximum of the norm $N^{(K)}$ which leads to the result of equation (7).

**Empirical validation of Lemmas 1 and 2:**

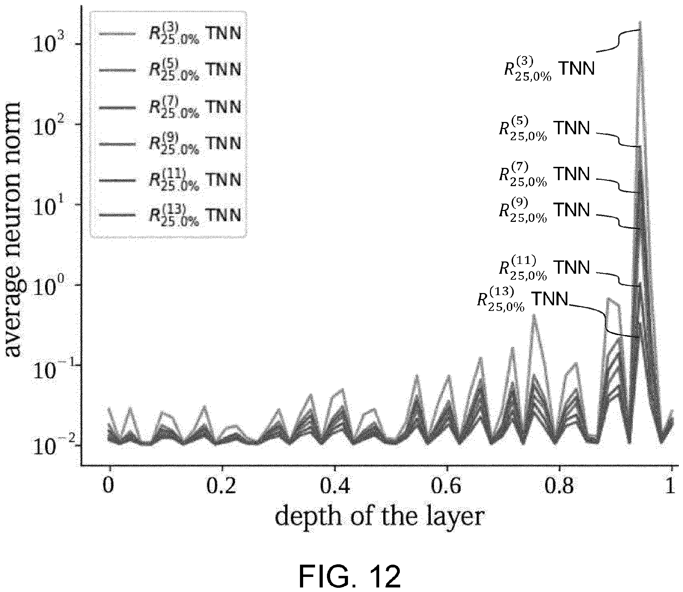

In lemma 1 and 2, it was stated the exponential convergence to 0 of the approximation error on the weight values. In order to empirically confirm this theoretical result, a ResNet 50 trained on ImageNet has been quantized in ternary values for different orders K. As can be seen in FIG. 12 (showing a comparison of the average norm of the quantization error for each layers of a ResNet 50 trained on ImageNet), the average error per layer, exponentially converges to 0 which matches the expectations. FIG. 12 also confirms the empirical result on the strategies for $\gamma$. The higher errors are located on the last layers, thus these layers require more attention.

**Proof of Lemma 3:**

Assume that the layers output two channels. Then one has $\gamma_1 = 0.5$ and $\gamma_2 = 0.5$. One simply needs to prove the result for $k_1 = 2$ and $k_2 = 1$ as the result will extend naturally from this case. The idea of the proof consists in showing that using lower $\beta$ values enables more possibilities of developments which may lead to better performance. Let $(W)_1$ and $(W)_2$ denote the weights corresponding to the computation of the first and second output channels respectively. Using $\gamma_1 = 1$, the second order development correspond to either quantizing $(W)_1$ or $(W)_2$. Assume $(W)_1$ is chosen for $R_{\gamma_1}^{(2)}$. Then $R_{\gamma_1}^{(3)}$ will either quantize the error form $(W)_2$ or further quantize the error from $R_{\gamma_1}^{(2)}$. In the first case, one ends up with $R^{(1)} + \sum_{i=2}^{k_1} R_{\gamma_1}^{(i)} = R^{(1)} + \sum_{i=2}^{k_2} R_{\gamma_2}^{(i)}$. Otherwise

$$\mathrm{Err}\left(R^{(1)} + \sum_{i=2}^{k_1} R_{\gamma_1}^{(i)}\right) > \mathrm{Err}\left(R^{(1)} + \sum_{i=2}^{k_2} R_{\gamma_2}^{(i)}\right).$$

**Proof of Lemma 4:**

First, the following intermediate result regarding two-layers neural networks is proved.
**Lemma 5:** Let f be a two-layers feed-forward neural network with activation function $\sigma = ReLU$. The expected error $\mathbb{E}\left[\|f^{(K)} - \tilde{f}^{(K)}\|\right]$ due to the ensemble development of order $K$ is bounded by $U$ defined as:

$$U = \sum_{k=1}^{K} \left( 1 - \mathbb{P}\left(f_1^{(K)} > 0 \cup \tilde{f}_{1,1}^{(K)} > 0\right) \right) \lambda_{\tilde{f}_{1,2}^{(K)}} \lambda_{R_2^{(K)}} \left\| R_2^{(K)} \right\| \times \mathbb{E}\left[\left\| \tilde{f}_{1,2}^{(K)} \right\|\right] \qquad (20)$$

where $\|W\|$, for any set of weights W, denotes the norm operator.

**Proof of Lemma 5:**

By definition of the ReLU function, if one has $f_1^{(K)} > 0$ then the activation function of $f_1$ behaves as the identity function. Similarly, if $\tilde{f}_{1,1}^{(K)} > 0$ then the activation function of $\tilde{f}_1$ also behaves as the identity. Therefore, if one has $f_1^{(K)} > 0 \cup \tilde{f}_{1,1}^{(K)} > 0$, then $\tilde{f}_{1,1}^{(K)} = f_1^{(K)}$. One deduces that $\mathbb{E}\left[\|f^{(K)} - \tilde{f}^{(K)}\|\right]$ is equal to

$$\int_{\left\{f_1^{(K)}>0 \cup \tilde{f}_{1,1}^{(K)}>0\right\}^C} \left\|f^{(K)}(x) - \tilde{f}^{(K)}(x)\right\| \; \mathbb{P}\, dx \qquad (21)$$

where $A^C$ is the complementary set of a set $A$ and $x$ is the input. In the set defined by $\tilde{f}_{1,1}^{(K)}(x) = 0$, the value of $\tilde{f}_1^{(K)}(x)$ is the value of $\tilde{f}_{1,2}^{(K)}(x)$. If one also has $\tilde{f}_1^{(K)}(x) = 0$, then $\left\|f^{(K)}(x) - \tilde{f}^{(K)}(x)\right\| = \left\|\tilde{f}_{1,2}^{(K)}(x)\right\|$. One can deduce

$$\mathbb{E}\left[\left\|f_1^{(K)} - \tilde{f}_1^{(K)}\right\|\right] = \left(1 - \mathbb{P}\left(f_1^{(K)} > 0 \cup \tilde{f}_{1,1}^{(K)} > 0\right)\right) \mathbb{E}\left[\left\|\tilde{f}_{1,2}^{(K)}\right\|\right] \qquad (22)$$

The final result comes from the definition of the norm operator of a matrix and equation (10).

The value of $1 - \mathbb{P}\left(f_1^{(K)} > 0 \cup \tilde{f}_{1,1}^{(K)} > 0\right)$ may be approached under the assumption that the distribution of the activations is symmetrical around 0. Such instances appear with batch normalization layers and result in $1 - \mathbb{P}\left(f_1^{(K)} > 0 \cup \tilde{f}_{1,1}^{(K)} > 0\right) \approx 1/2$. The operator norm may also be computed instead of $\mathbb{E}\left[\left\|\tilde{f}_{1,2}^{(K)}\right\|\right]$ to remain data-free. In consequence, one has the following corollary:

**Corollary 2:** The previous upper bound $U$ on the expected error due to the ensemble development can be approximated as follows

$$U \approx \frac{1}{2} \sum_{k=1}^{K} \left\|R_2^{(k)}\right\| \lambda_{\tilde{f}_{1,2}^{(K)}} \lambda_{R_2^{(K)}} \sum_{k=K_1}^{K} \left\|R_1^{(k)}\right\| \lambda_x \lambda_{R_1^{(K)}} \qquad (23)$$

In practice, for development in b bits, with high values of $b$ (*e.g.* $b \geq 4$), the single operator $R^{(1)}$ is enough to satisfy equation (9) and $K_1 = 1$. For lower values of $b$ (*e.g.* ternary quantization), the suitable value for $K_1$ depends on the neural network architecture, usually ranging from 3 to 6.

The proof of Lemma 4 follows from Lemma 5 and Corollary 2. One derives the exact formula for the upper bound $U$ in the general case of $L$ layers feed forward neural networks

$$\sum_{k=1}^{K} \left\|R_L^{(k)}\right\| \prod_{l=1}^{L-1} \sum_{k=K_1}^{K} \mathbb{E}\left[\left\|\tilde{h}_l^{(k)}\right\|\right] \lambda_{\tilde{h}_l^{(k)}} P \qquad (24)$$

$$P = 1 - \mathbb{P}\left(f_l^{(K)} > 0 \cup \tilde{f}_l^{(K)} > 0\right)$$

where . This is a consequence of the definition of the operator norm and the proposed ensembling. The approximation is obtained under the same assumptions and with the same arguments as provided in Corollary 2.

**Choice of $\gamma$ strategy (equation (5)):**

The strategy of choice is validated by trying four options of selection of the ($\gamma^l$) from $\gamma$ and comparing the results on MobileNets for ImageNet. The candidates are:

1. the constant strategy where $\gamma^l = \gamma$ for all $l$;
2. the proposed linear ascending strategy (noted linear ascending or linear+) from equation (5) which, on the contrary, puts more importance on the last layers;
3. the linear descending strategy (noted linear descending or linear-) which, on the contrary, puts more importance on the first layers;
4. a width-adaptive strategy which is derived from the number of neurons/channel or each layer, such that

$$\gamma^l = \gamma \frac{L|W_l|}{\Sigma_l |W_l|} .$$

The performance of the method with a budgeted development $R_{50\%}^{(2)}$ has been tested in int6 (with order k=2 and $\gamma$ = 50%). The results are listed in Table 3 below. It is observed that the linear+ strategy is the best performing one: one possible explanation is that the first layers of a DNN typically have fewer values, thus are easier to quantize well.

|  | const | linear+ | linear- | adaptive |
|---|---|---|---|---|
| MobileNet (0.35) | 55.15 | 59.46 | 33.69 | 59.19 |
| MobileNet (0.5) | 51.59 | 64.96 | 46.56 | 64.43 |
| MobileNet (0.75) | 66.31 | 69.10 | 55.78 | 68.92 |
| MobileNet (1) | 67.07 | 71.55 | 56.98 | 70.85 |
| MobileNet (1.4) | 72.55 | 74.05 | 69.38 | 73.15 |

*Table 3 : Top1 Accuracy of MobileNet V2 on ImageNet for a development in int6 and $R_{50\%}^{(2)}$ . Each strategy has been tested and the linear ascending (linear+) is the best performing one.*

**Ensemble approximation of developed quantized neural networks:**

Recall that

$$f_{L-1}^{(K)}(x) = \sigma_{L-1}\left(\sum_{k=1}^{K} R_{L-1}^{(k)} \lambda_{R_{L-1}^{(k)}} X_{f_{L-1}^{(K)}} + b_{L-1}\right).$$

Directly applying equation (9) yields for a given $K_{L-1} < K$:

$$X_{f_{L-1}^{(K)}} \mapsto \sigma_{L-1}\left(\sum_{k=1}^{K_{L-1}} R_{L-1}^{(k)} X_{f_{L-1}^{(K)}} \lambda_{X_{f_{L-1}^{(K)}}} \lambda_{R_{L-1}^{(k)}} + b_{L-1}\right) + \sum_{k=K_{L-1}+1}^{K} R_{L-1}^{(k)} X_{f_{L-1}^{(K)}} \lambda_{X_{f_{L-1}^{(K)}}} \lambda_{R_{L-1}^{(k)}} \quad (25)$$

However, the two terms $X_{f_{L-1}^{(K)}}(x)$ inside and outside the activation function are not independent. Furthermore, the terms that compose $X_{f_{L-1}^{(K)}}(x)$, from equation (13), do not have the same range values, *i.e.*

$\tilde{g}_{L-2}^{(K)}\left(X_{\tilde{g}_{L-2}^{(K)}}\right)\lambda_{R_{L-2}^{(K)}} \gg h_{L-2}^{(K)}\left(X_{\tilde{h}_{L-2}^{(K)}}\right)\lambda_{\tilde{h}_{L-2}^{(K)}}$. One defines the operation * as follows:

$$\tilde{f}_{L-1}^{(K)}(x) = \sigma_{L-1}\left(\sum_{k=1}^{K_{L-1}} R_{L-1}^{(k)}\tilde{g}_{L-2}^{(K)}\left(X_{\tilde{g}_{L-2}^{(K)}}\right)\lambda_{R_{L-1}^{(k)}}\lambda_{\tilde{g}_{L-2}^{(K)}} + b_{L-1}\right)$$
$$+ \sum_{k=K_{L-1}+1}^{K} R_{L-1}^{(k)}\tilde{g}_{L-2}^{(K)}\left(X_{\tilde{g}_{L-2}^{(K)}}\right)\lambda_{R_{L-1}^{(k)}}\lambda_{\tilde{g}_{L-2}^{(K)}} \quad\quad (26)$$
$$+ \sigma_{L-1}\left(\sum_{k=1}^{K_{L-1}} R_{L-1}^{(k)}\tilde{h}_{L-2}^{(K)}\left(X_{\tilde{h}_{L-2}^{(K)}}\right)\lambda_{R_{L-1}^{(k)}}\lambda_{\tilde{h}_{L-2}^{(K)}}\right)$$
$$+ \sum_{k=K_{L-1}+1}^{K} R_{L-1}^{(k)}\tilde{h}_{L-2}^{(K)}\left(X_{\tilde{h}_{L-2}^{(K)}}\right)\lambda_{R_{L-1}^{(k)}}\lambda_{\tilde{h}_{L-2}^{(K)}}$$

Now one has two independent functions $\tilde{g}_{L-1}^{(K)}$ and $\tilde{h}_{L-1}^{(K)}$ such that $\tilde{f}_{L-1}^{(K)} = \tilde{g}_{L-1}^{(K)} + \tilde{h}_{L-1}^{(K)}$, these functions have independent inputs and

$$\begin{cases} \tilde{g}_{L-1}^{(K)}\left(X_{\tilde{g}_{L-2}^{(K)}}\right) = \sigma_{L-1}\left(\sum_{k=1}^{K_{L-1}} R_{L-1}^{(k)}\tilde{g}_{L-2}^{(K)}\left(X_{\tilde{g}_{L-2}^{(K)}}\right)\lambda_{R_{L-1}^{(k)}}\lambda_{\tilde{g}_{L-2}^{(K)}} + b_{L-1}\right) \\ \quad\quad + \sum_{k=K_{L-1}+1}^{K} R_{L-1}^{(k)}\tilde{g}_{L-2}^{(K)}\left(X_{\tilde{g}_{L-2}^{(K)}}\right)\lambda_{R_{L-1}^{(k)}}\lambda_{\tilde{g}_{L-2}^{(K)}} \\ \tilde{h}_{L-1}^{(K)}\left(X_{\tilde{h}_{L-2}^{(K)}}\right) = \sigma_{L-1}\left(\sum_{k=1}^{K_{L-1}} R_{L-1}^{(k)}\tilde{h}_{L-2}^{(K)}\left(X_{\tilde{h}_{L-2}^{(K)}}\right)\lambda_{R_{L-1}^{(k)}}\lambda_{\tilde{h}_{L-2}^{(K)}}\right) \\ \quad\quad + \sum_{k=K_{L-1}+1}^{K} R_{L-1}^{(k)}\tilde{h}_{L-2}^{(K)}\left(X_{\tilde{h}_{L-2}^{(K)}}\right)\lambda_{R_{L-1}^{(k)}}\lambda_{\tilde{h}_{L-2}^{(K)}} \end{cases} \quad (27)$$

This defines an iterative procedure in order to define the ensembling of developments of residual errors for a feedforward neural network *f* with any number L of layers.

To sum it up, the resulting predictors share an identical architecture up to their respective development order defined by $K_1$. The difference comes from their weight values which correspond to difference order of development of the full-precision weights. This is also the case if one wants ensembles of three or more predictors. In such instances, instead of only $K_1$, one has $K_1, ..., K_{m-1}$ for m predictors.

**Notations:**

The notations used in examples previously discussed are summarized in the following table below. In examples, there are three hyper-parameters: the budget $\beta$, the highest development order K, and m the number of predictors in the ensemble. These hyper parameters define the maximum of over-head computations allowed. Then the values of $\gamma$ and $\gamma^{l}$ may be deduced to fit in the budget. Other notations are used in the lemmas and corollaries.

| | symbol | meaning |
|---|---|---|
| parameters | $\beta$ | budget of added computations |
| | $K$ | maximum development order |
| | $\gamma$ | sparsity parameter over the whole DNN |
| | $\gamma^l$ | sparsity parameter for layer $l$ |
| | $M$ | number of predictors in the ensemble |
| DNN | $f$ | full-precision DNN |
| | $f^{(k)}$ | development at order $k$ of $f$ |
| | $\tilde{f}^{(k)}$ | ensemble development of order $k$ of $f$ |
| Layer | $f_l$ | full-precision layer $l$ |
| | $f_l^{(k)}$ | development at order $k$ of layer $l$ |
| | $\tilde{f}_l^{(k)}$ | ensemble development at order $k$ of layer $l$ |
| Weights | $W$ | full-precision weight tensor of a Layer |
| | $(W)_i$ | Column $i$ of $W$ |
| | $w$ | full-precision weight scalar |
| | $R^{(k)}$ | weights of development of order $k$ |
| | $w^{(k)}$ | scalar weight values of $R^{(k)}$ |
| | $R_\gamma^{(k)}$ | sparse $R^{(k)}$ of budget $\gamma$ |
| Scaling | $(\lambda)_i$ | rescaling factor for column $i$ |
| | $\left(\lambda_R^{(k)}\right)_i$ | rescaling factor of $R^{(k)}$ and column $i$ |
| | $\lambda_{R_l^{(k)}}$ | rescaling factor of $R^{(k)}$ and layer $l$ |
| | $\lambda_{f_l^{(k)}}$ | rescaling factor of $f_l^{(k)}$ |
| | $\lambda_x$ | rescaling factor of an input $x$ |
| Inputs | $x$ | input of the DNN |
| | $X_{f_{L-1}^{(k)}}$ | transformation of $x$ into the input of $f_{L-1}^{(k)}$ |
| | $X_{g_{L-1}^{(k)}}$ | transformation of $x$ into the input of $g_{L-1}^{(k)}$ |
| | $X_{h_{L-1}^{(k)}}$ | transformation of $x$ into the input of $h_{L-1}^{(k)}$ |

**Models and datasets:**

As illustrated above, the proposed method and examples thereof has been validated on three challenging computer vision tasks which are commonly used for comparison of quantization methods. First, on image classification, ImageNet (discussed in reference J. Deng, W. Dong, et al, ImageNet: A Large-Scale Hierarchical Image Database, In CVPR, 2009) is considered ($\approx$ 1.2M images train/50k test). Second, on object detection, the experiments were conducted on Pascal VOC 2012 (discussed in reference M. Everingham, L. Van Gool, C. K. I. Williams, J. Winn, and A. Zisserman, The PASCAL Visual Object Classes Challenge 2012 (VOC2012) Results. http://www.pascalnetwork.org/challenges/VOC/voc2012/workshop/index.html 2012.) ($\approx$ 17k images in the test set). Third, on image segmentation, the CityScapes dataset (discussed in reference Marius Cordts, Mohamed Omran, Sebastian Ramos, Timo Rehfeld, Markus Enzweiler, Rodrigo Benenson, Uwe Franke, Stefan Roth, and Bernt Schiele, The cityscapes dataset for semantic urban scene understanding, In CVPR, pages 3213-3223, 2016.) was used (with 500 validation images). In the experiments MobileNets (discussed in reference Mark Sandler, Andrew Howard, et al, Mobilenetv2: Inverted residuals and linear bottlenecks, In CVPR, pages 4510-4520, 2018.) and ResNets (discussed in reference Kaiming He, Xiangyu Zhang, et al., Deep residual learning for image recognition, In CVPR, pages 770-778, 2016) were used on ImageNet. For Pascal VOC object detection challenge, the method was tested on an SSD architecture (discussed in reference Wei Liu, Dragomir Anguelov, Dumitru Erhan, Christian Szegedy, Scott Reed, Cheng-Yang Fu, and Alexander CBerg, Ssd: Single shot multibox detector, In ECCV, pages 21-37. Springer, 2016) with MobileNet backbone. On CityScapes DeepLab V3+ (discussed in reference Liang-Chieh Chen, Yukun Zhu, George Papandreou, Florian Schroff, and Hartwig Adam, Encoder-decoder with atrous separable convolution for semantic image segmentation, In ECCV, pages 801-818, 2018) was used with a MobileNet backbone. The diversity of tasks and networks demonstrates how well the method generalizes.

**Implementation Details:**

In implementations of the above-discussed experiments, Tensorflow implementations of the baseline models from the official repository were sued when possible or other publicly available resources when necessary. MobileNets and ResNets for ImageNet come from tensorflow models zoo https://github.com/tensorflow/classification. In object detection, the SSD model was tested with a MobileNet backbone from https://github.com/Manish. Finally, in image semantic segmentation, the DeepLab V3+ model came from https://github.com/bonlime.

The networks pre-trained weights provide standard baseline accuracies on each task. The computations of the residues as well as the work performed on the weights were done using the Numpy python's library. As listed in the table below (showing processing time on an Intel(R) Core(TM) i9-9900K CPU @ 3.60GHz of examples of the proposed method for different configurations and architectures on ImageNet and a quantization in TNN. 'm' stands for minutes and 's' for seconds.), the creation of the quantized model takes between a few minutes for a MobileNet V2 and half an hour for a ResNet 152 without any optimization of the quantization process. These results were obtained using an Intel(R) Core(TM) i9-9900K CPU @ 3.60GHz.

| k | ensembling | ResNet 152 | MobileNet v2 (1.4) |
|---|---|---|---|
| 1 | $X$ | 0m6s | 0m4s |
| 2 | $X$ | 0m6s | 0m4s |
| 2 | ✓ | 0m6s | 0m6s |
| 7 | $X$ | 0m16s | 0m7s |
| 7 | ✓ | 0m16s | 0m7s |

**Operation Head-count:**

Let $W$ be the real-valued weights of a $d \times d$ convolutional layer on input feature maps of shape $D \times D \times n_i$ and $n_0$ outputs and stride s. Then, the convolutional product requires $d^2 \frac{D^2}{s^2} n_i n_0$ floating point multiplications. The quantized layer requires two rescaling operations (for the quantization of the inputs and the inverse quantization operation) and an int-b convolution, *i.e.* $n_i D^2 + \frac{D^2}{s^2} n_0$ floating point multiplications and $d^2 \frac{D^2}{s^2} n_i n_0$ int-b multiplications. The number of additions remains unchanged. According to reference Erica Klarreich, Multiplication hits the speed limit, Communications of the ACM, 63(1):11-13, 2019, the lowest complexity for b-digits scalar multiplication is $\sigma(b \log(b))$ bit operations. This is theoretically achieved using Harvey-Hoeven algorithm. This value may be used as it is the least favourable setup for the proposed method. As a consequence, the number $\mathcal{O}_{\text{original}}$ bit operations required for the original layer, $\mathcal{O}_{R^{(1)}}$ the number of bot operations for the quantized layer and $\mathcal{O}_{R^{(k)}}$ for the $k^{\text{th}}$ order residual quantization development are

$$\begin{cases} \mathcal{O}_{\text{original}} = D^2 \dfrac{d^2 n_i n_0}{s^2} 32 \log(32) \\[2ex] \mathcal{O}_{R^{(1)}} = D^2 \left[ \left( n_i + \dfrac{n_0}{s^2} \right) 32 \log(32) + \dfrac{d^2 n_i n_0}{s^2} b \log(b) \right] \\[2ex] \mathcal{O}_{R^{(k)}} = D^2 \left[ \left( n_i + \dfrac{n_0}{s^2} \right) 32 \log(32) + k \dfrac{d^2 n_i n_0}{s^2} b \log(b) \right] \end{cases} \qquad (28)$$

Using this result allows to estimate the maximum order of development before which the number of operations in $f^{(K)}$ exceeds $\mathcal{O}_{\text{baseline}}$. In the case of fully-connected layers, D=1, s=1 and d=1. In the experiments, the induced metric of accuracy with respect to the total number of bit-wise operations performed by the DNN on a single input is used. This metric does not consider the fact that the added operations can be performed in parallel, which is discussed now.

**Parallelization Cost:**

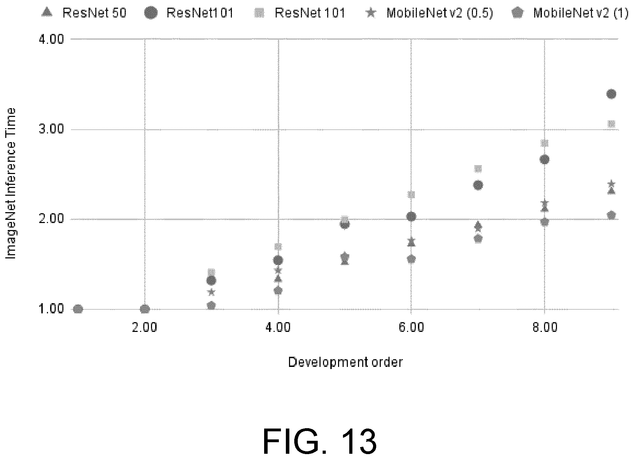

Examples of the proposed method adds overhead computations in order to restore the accuracy of the quantized model. Its efficiency is demonstrated at an equivalent number of binary operations. Also, the added operations are parallelizable with the original architecture. A test was ran using a batch of 16 images on a RTX 2070 GPU. In FIG. 13, it is shown the normalized inference times on ImageNet of several ResNets and MobileNets. The normalized runtime is defined as the ratio between the runtime at a given order over the runtime of the baseline quantization method. It is observed that the second order development always comes at no cost. Higher order development at very low cost as well, *e.g.* order 8 developments are only two to three times slower than the baseline, and systemically restore the full precision accuracy, even in ternary quantization. FIG. 13 shows standardized inference time on ImageNet of different architectures, and it is demonstrated that parallelization of the overhead computations drastically reduces their impact on runtime.

**Robustness** to the **value** of y:

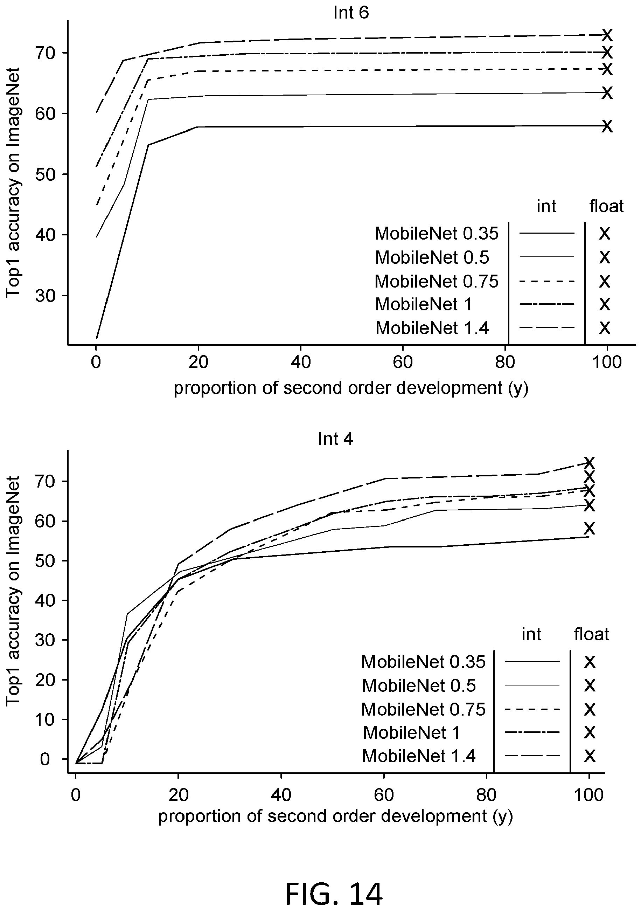

The performance boost due to the group-sparsity development is immediate, i.e. even for small values of $\gamma$. This can be seen in FIG. 14, where it is shown for different bit widths (int6 and int4) the influence of $\gamma$ on the accuracy of several MobileNet V2 architectures (with various width multipliers) on ImageNet. In int4, the accuracy reaches its asymptotic convergence for $\approx$50% but large improvements are already made for values below 20%. This is even more impressive in int6 where the accuracy is restored with $\approx$25% and a significant increase can be observed for values below 10%. Note that under 20% the computation overhead is negligible. FIG. 14 shows the top1 accuracy of MobileNets on ImageNet quantized in int6 (left) and int4 (right) as a function of $\gamma$ for k = 2. It is observed an immediate boost (< 10%), especially in int6. Thus, the development can be used efficiently at a low overhead cost.

**Complexity of the quantization provided by the method:**

The proposed quantization using development of residual errors is by design faster than competitive methods based on data generation. It is now discussed a theoretical study of the complexity of these algorithms. The complexity of an algorithm is the number of elementary steps performed by the algorithm while processing an input. Here the elementary steps are: scalar multiplications, scalar value comparison (greater or lower) and value assignment. The study of complexity gives the trend of the dependency on the input size. In other words, an algorithm with a squared complexity means that for an input size n the algorithm will require about $n^2$ elementary operations. In practice the exact dependency may be $3.351354n^2$ but the complexity will still be $n^2$ as, mathematically, these two functions behave similarly when n grows to infinity.

**Complexity of the proposed quantization using development of residual errors:**

Let $f$ be a DNN with $L$ layers and $W_l$ weights for each layer. The $W_l$ are lists of vectors with $|W_l|$ elements. Then the complexity $\mathcal{O}$ (DRE) of the proposed quantization method is

$$\mathcal{O}(\text{DRE}) = \sum_{l=1}^{L} |W_l| \ln(|W_l|)$$

The complexity is the sum of the search of the rescaling factor, which is the search of the maximum, the update of the weights (scalar multiplication) and the assignment of the new weight values.

**Complexity of the MixMix methods (which have been discussed hereinabove):**

These methods start by generating training data from the trained network by optimizing a random image through the network. Let's assume that $I$ images are generated using S steps then the complexity is

$$\mathcal{O}(\mathrm{MixMix}) = \sum_{l=1}^{L} |W_l| \ln(|W_l|) + |W_l|^2 \times I \times S$$

Then for a single layer (simpler case) one has $\mathcal{O}$ (MixMix) > O(DRE)$^2$ which means that given a 10 times larger input the other methods will be 10 times slower than the proposed method. Furthermore, in practice $I$ and S are very large (over 100.000) which explains why in practice the proposed method takes less than a minute while MixMix-like methods require up to a day of processing (i.e. cannot be done on the edge).

Other examples of the method, which may be combined with any example discussed herein, are now discussed.

In examples, the method may further comprise performing a training of the quantized neural network. This may be done using any suitable training solution. For example, the method may comprise further training the already quantized neural network (e.g. by further training order of developments from scratch), by fine-tuning the parameters of the already quantized neural network (e.g. further to or during the quantization), or by training the neural network during the quantization (e.g. by training order of developments from scratch). For example, the method may comprise performing a quantized-aware-training of the neural network. In other words, even if the neural network is provided already trained, the method may continue its training, during or after the quantization.

In examples, the method may further comprise pruning the quantized neural network, i.e. pruning the quantized neural network that results from the quantizing performed by the method. Pruning the quantized neural network consists in removing from the quantizing neural network redundant operations. For that, the method may implement the method for pruning a neural network disclosed in European Patent Application EP21306096.5, which is incorporated herein by reference. Specifically, in this case, further to the quantizing step of the method, the method performs the providing step S110 of the pruning method disclosed in European Patent Application EP21306096.5 so that the providing step S110 consists in providing the quantized neural network that results from the quantizing step performed by the method. Then, the method performs, for each of the one or more (quantized) layers of the quantized neural network, the decomposing S120 and splitting (S130-S140) steps of the pruning method disclosed in European Patent Application EP21306096.5. The method may perform any example of the pruning method disclosed in European Patent Application EP21306096.5. The method may alternatively perform any other pruning method, for example a structured pruning method, a sparsity method (e.g. a block sparsity method), a splitting method, or any other suitable method.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 15 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

**Claims**

1. A computer-implemented method for neural network quantization, the method comprising:

   - providing:

      o a trained neural network having layers of weights;
      o a quantization operator that reduces the number of bits of an input bit-wise representation; and

   - quantizing the neural network, including, for each respective layer of one or more layers of the neural network, determining a respective development of the respective layer in a sum of quantized residual errors of the quantization operator.

2. The method of claim 1, wherein for the said each respective layer, the sum includes terms each of a respective order and respectively comprising the quantization operator multiplied by a residual quantization error at the respective order.

3. The method of claim 2, wherein the residual quantization error at the respective order is the quantization operator applied to the difference between the weights of the layer and a sum of the inverses of the quantization operator applied to the residual quantization errors of lower respective orders.

4. The method of claim 3, wherein the development is of the type:

$$f^{(K)} : x \mapsto \sigma\left( \sum_{k=1}^{K} R^{(k)} Q(x) \, \lambda_{R^{(k)}} \lambda_x + b \right),$$

   where:

   • $f$ is the respective layer, $\sigma$ the activation function of $f$, and $b$ the bias of $f$,
   • $R^{(k)} = Q\left( W - \sum_{i=1}^{k-1} Q^{-1}\left( R^{(i)} \right) \right)$, where $Q$ is the quantization operator, $W$ represents the weights of layer $f$, and $R^{(1)} = W^q = Q(W)$,
   • $\lambda_x$ and $\lambda_{R(k)}$ are rescaling factors corresponding to the quantization of $x$ and $R^{(k)}$ respectively, and
   • K is the development order for the respective layer.

5. The method of any one of claims 1 to 4, wherein the quantizing of the neural network comprises removing a proportion of output channels that contribute the less to the quantized residual errors.

6. The method of claim 5, wherein the removal of the proportion of output channels includes:

   - providing:

◦ a given order of development for the layers of the trained neural network; and
◦ a computation budget corresponding to a function of a channel proportion and of the given order of development;

- dividing the budget over the layers of the neural network into layer-wise channel proportions; and
- removing for each respective layer the corresponding layer-wise channel proportion of output channels that contribute the less to the quantized residual errors for the respective layer.

7. The method of any one of claims 1 to 6, wherein the neural network is a feed-forward neural network and the quantizing of the neural network comprises, for each respective layer of the neural network, separating the layer into:

- one or more first independent quantized predictors each consisting of a respective part of the respective development of the respective layer, the one or more first independent predictors corresponding to consecutive parts of the respective development of the respective layer, and
- a second independent quantized predictor corresponding to the development of a difference between the layer and the respective development of the layer at an order equal to the sum of the development orders of the first independent predictors,

the sum of the development orders of the independent predictors being equal to the development order of the respective development of the respective layer.

8. The method of claim 7, wherein the independent predictors have similar widths.

9. The method of any one of claims 1 to 8, wherein the method further comprises pruning the quantized neural network.

10. The method of any one of claims 1 to 9, wherein the quantization operator converts a first bit-wise representation into a lower second bit-wise representation, and wherein:

- the first bit-wise representation is a float representation; and/or
- the second bit-wise representation is the int8 representation, the int6 representation, the int5 representation, the int4 representation, the int3 representation, the int2 representation, or the ternary representation.

11. The method of any one of claims 1 to 10, wherein the method further comprises performing a training of the quantized neural network.

12. A neural network obtainable according to the method of any one of claims 1 to 11.

13. A computer program comprising instructions for performing the method of any one of claims 1 to 11.

14. A device comprising a computer-readable data storage medium having recorded thereon the computer program of claim 13 and/or the neural network of claim 12.

15. The device of claim 14, further comprising a processor coupled to the data storage medium.

FIG. 1A

FIG. 1B

FIG. 1C

FIG. 2A        FIG. 2B        FIG. 2C

FIG. 3

FIG. 4

MobileNet

⬟ TNN    +int3    ★ int4    ◆ int5    ■ int6    ▲ int8    ● float32

top1 accuracy on ImageNet

number of bit-wise operations

ResNet

⬟ TNN    +int3    ★ int4    ◆ int5    ■ int6    ▲ int8    ● float32

top1 accuracy on ImageNet

number of bit-wise operations

FIG. 5

FIG. 6

FIG. 7

FIG. 8

FIG. 9

EP 4 177 791 A1

EP 4 177 791 A1

DeepLab v3+

● float32 ⬠TNN (sparse) × TNN ◆ int3 (sparse) ■ int4

$R^{(k=13)}_{y=25\%}$ $R^{(k=9)}_{y=50\%}$ $R^{(k=2)}_{y=50\%}$ $R^{(k=2)}_{y=100\%}$

$R^{(k=5)}_{y=100\%}$

$R^{(k=4)}_{y=100\%}$ $R^{(k=2)}_{y=100\%}$ $R^{(k=2)}_{y=25\%}$ $R^{(k=2)}_{y=75\%}$

$R^{(k=10)}_{y=25\%}$ $R^{(k=2)}_{y=50\%}$

$R^{(k=2)}_{y=75\%}$

$R^{(k=2)}_{y=25\%}$

$R^{(k=1)}_{y=100\%}$

$R^{(k=1)}_{y=100\%}$

mIOU on CityScapes

80.00
60.00
40.00
20.00
0.00

6.00E+10    8.00E+10    1.00E+11    2.00E+11    4.00E+11    6.00E+11

number of bit-wise operations

FIG. 10

FIG. 11

FIG. 12

FIG. 13

FIG. 14

FIG. 15

Europäisches
Patentamt

European
Patent Office

Office européen
des brevets

# EUROPEAN SEARCH REPORT

Application Number

EP 21 30 6572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI GUANGLI LIGUANGLI@ICT AC CN ET AL: "Unleashing the low-precision computation potential of tensor cores on GPUs", PROCEEDINGS OF THE 2021 IEEE/ACM INTERNATIONAL SYMPOSIUM ON CODE GENERATION AND OPTIMIZATION, IEEE PRESSPUB767, PISCATAWAY, NJ, USA, 27 February 2021 (2021-02-27), pages 90-102, XP058652361, DOI: 10.1109/CGO51591.2021.9370335 * sections III, V * | 1-15 | INV. G06N3/04 G06N3/08 |
| A | US 2020/193273 A1 (CHUNG ERIC S [US] ET AL) 18 June 2020 (2020-06-18) * paragraphs [0108] - [0111] * | 1-15 | |
| A | LI ZEFAN ET AL: "Residual Quantization for Low Bit-width Neural Networks", IEEE TRANSACTIONS ON MULTIMEDIA, vol. 1, 1 January 2021 (2021-01-01), pages 1-1, XP055873857, USA ISSN: 1520-9210, DOI: 10.1109/TMM.2021.3124095 Retrieved from the Internet: URL:https://ieeexplore.ieee.org/stampPDF/g etPDF.jsp?tp=&arnumber=9599561&ref=aHR0cHM 6Ly9pZWVleHBsb3JlLmllZWUub3JnL2Fic3RyYWN0L 2RvY3VtZW50Lzk1OTk1NjE=> * sections III, IV * | 1-15 | TECHNICAL FIELDS SEARCHED (IPC) G06N |
| A | YUNHUI GUO: "A Survey on Methods and Theories of Quantized Neural Networks", ARXIV.ORG, CORNELL UNIVERSITY LIBRARY, 201 OLIN LIBRARY CORNELL UNIVERSITY ITHACA, NY 14853, 13 August 2018 (2018-08-13), XP080998800, * sections 3, 4, 6.1, 6.2 * | 1-15 | |

The present search report has been drawn up for all claims

| Place of search | Date of completion of the search | Examiner |
|---|---|---|
| Munich | 8 April 2022 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6572

08-04-2022

| Patent document cited in search report | | Publication date | Patent family member(s) | | Publication date |
|---|---|---|---|---|---|
| US 2020193273 | A1 | 18-06-2020 | CN | 113168563 A | 23-07-2021 |
| | | | EP | 3895075 A1 | 20-10-2021 |
| | | | US | 2020193273 A1 | 18-06-2020 |
| | | | WO | 2020123185 A1 | 18-06-2020 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 21306096

### Non-patent literature cited in the description

- **KAIMING HE ; XIANGYU ZHANG et al.** Deep residual learning for image recognition. *CVPR,* 2016, 770-778
- Ssd: Single shot multibox detector. **WEI LIU ; DRAGOMIR ANGUELOV ; DUMITRU ERHAN ; CHRISTIAN SZEGEDY ; SCOTT REED ; CHENG-YANG FU ; ALEXANDER C BERG.** ECCV. Springer, 2016, 21-37
- **LIANG-CHIEH CHEN ; GEORGE PAPANDREOU ; FLORIAN SCHROFF ; HARTWIG ADAM.** Rethinking atrous convolution for semantic image segmentation. *arXiv:1706.05587,2017*
- **RITCHIE ZHAO ; YUWEI HU ; JORDAN DOTZEL ; CHRIS DE SA ; ZHIRU ZHANG.** Improving neural network quantization without retraining using outlier channel splitting. *ICML,* 2019, 7543-7552
- **MARKUS NAGEL ; MART VAN BAALEN et al.** Data-free quantization through weight equalization and bias correction. *ICCV,* 2019, 1325-1334
- **ELDAD MELLER ; ALEXANDER FINKELSTEIN ; URI ALMOG ; MARK GROBMAN.** Same, same but different: Recovering neural network quantization error through weight factorization. *ICML,* 2019, 4486-4495
- **YUHANG LI ; FENG ZHU ; RUIHAO GONG ; MINGZHU SHEN ; XIN DONG ; FENGWEI YU ; SHAOQING LU ; SHI GU.** Mixmix: All you need for data-free compression are feature and data mixing. *ICCV,* 2021, 4410-4419
- **J. DENG ; W. DONG et al.** ImageNet: A Large-Scale Hierarchical Image Database. *CVPR,* 2009
- **M. EVERINGHAM ; L. VAN GOOL ; C. K. I. WILLIAMS ; J. WINN ; A. ZISSERMAN.** *The PASCAL Visual Object Classes Challenge 2012 (VOC2012) Results,* 2012, http://www.pascalnetwork.org/challenges/VOC/voc2012/workshop/index.html
- **MARIUS CORDTS ; MOHAMED OMRAN ; SEBASTIAN RAMOS ; TIMO REHFELD ; MARKUS ENZWEILER ; RODRIGO BENENSON ; UWE FRANKE ; STEFAN ROTH ; BERNT SCHIELE.** The cityscapes dataset for semantic urban scene understanding. *CVPR,* 2016, 3213-3223
- **MARK SANDLER ; ANDREW HOWARD et al.** Mobilenetv2: Inverted residuals and linear bottlenecks. *CVPR,* 2018, 4510-4520
- Ssd: Single shot multibox detector. **WEI LIU ; DRAGOMIR ANGUELOV ; DUMITRU ERHAN ; CHRISTIAN SZEGEDY ; SCOTT REED ; CHENG-YANG FU ; ALEXANDER CBERG.** ECCV. Springer, 2016, 21-37
- **LIANG-CHIEH CHEN ; YUKUN ZHU ; GEORGE PAPANDREOU ; FLORIAN SCHROFF ; HARTWIG ADAM.** Encoder-decoder with atrous separable convolution for semantic image segmentation. *ECCV,* 2018, 801-818
- **ERICA KLARREICH.** Multiplication hits the speed limit. *Communications of the ACM,* 2019, vol. 63 (1), 11-13